# EUROPEAN PATENT APPLICATION

(11) **EP 4 741 931 A1**
(43) Date of publication of application: **13.05.2026**
(21) Application number: 25206374.8
(22) Date of filing: 02.10.2025
(51) Int. Cl.: G03G 5/04, G03G 5/05, G03G 5/06

(54) **ELECTROPHOTOGRAPHIC PHOTORECEPTOR, PROCESS CARTRIDGE, AND IMAGE FORMING APPARATUS**

(30) Priority: 11.11.2024 JP 2024197011
(71) Applicant: FUJIFILM Business Innovation Corp., Minato-ku Tokyo (JP)
(72) Inventor: SASAKI, Tomoya, Ebina-shi, Kanagawa (JP); OYAMADA, Yuki, Ebina-shi, Kanagawa (JP); KIGOSHI, Yoichi, Ebina-shi, Kanagawa (JP); KANO, Fuyuki, Ebina-shi, Kanagawa (JP); TAKAOKA, Kohei, Ebina-shi, Kanagawa (JP); FUJII, Ryosuke, Ebina-shi, Kanagawa (JP); KUSANO, Keisuke, Ebina-shi, Kanagawa (JP); IDE, Kenta, Ebina-shi, Kanagawa (JP)
(74) Representative: Becker Kurig & Partner Patentanwälte mbB

(57) **Abstract**

An electrophotographic photoreceptor includes a conductive substrate, and a photosensitive layer disposed on the conductive substrate, in which an outermost surface layer contains a charge transport material, a polyarylate resin having a dicarboxylic acid unit represented by Formula (A) and a diol unit represented by Formula (B), a polycarbonate resin, and a phenolic compound having 3 or fewer phenolic functional groups and a molecular weight of 300 or more, and a value of a dielectric loss tangent tanδ of the outermost surface layer at a frequency of 1 Hz is 0.50 or less, 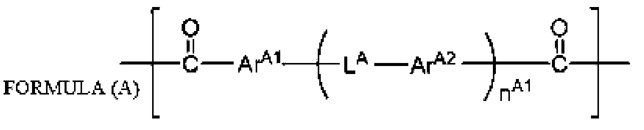 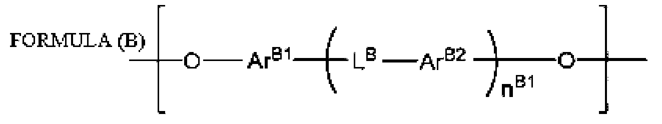 in Formula (A), Ar^{A1} and Ar^{A2} are each independently an aromatic ring which may have a substituent, L^{A} is a single bond or a divalent linking group, and n^{A1} is 0, 1, or 2,
in Formula (B), Ar^{B1} and Ar^{B2} are each independently an aromatic ring which may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

## Description

### BACKGROUND OF THE INVENTION

### (i) Field of the Invention

The present disclosure relates to an electrophotographic photoreceptor, a process cartridge, and an image forming apparatus.

### (ii) Description of Related Art

JP2003-131406A discloses an organic photoreceptor in which the organic photoreceptor is formed by laminating a charge generation layer and a charge transport layer on a conductive support, where a dielectric constant ε of the charge transport layer at a frequency of 20 Hz is 3.4 or less, and a dielectric loss tanδ of the charge transport layer at a frequency of 1 kHz is 0.001 to 0.03.

JP2017-125878A discloses an electrophotographic photoreceptor in which a photosensitive layer contains a charge generation agent, a charge transport agent, and a binder resin, and the binder resin includes a polyarylate resin and a polycarbonate resin.

JP2024-011918A discloses an electrophotographic photoreceptor including a conductive substrate and a lamination-type photosensitive layer having a charge generation layer and a charge transport layer, in which the charge transport layer contains a charge transport material, a polyarylate resin, and a polycarbonate resin.

JP2023-106209A discloses a cleaning blade in which a contact portion coming into contact with a member to be cleaned contains a polyurethane rubber obtained by polymerizing at least a polyol component and a polyisocyanate component, and the contact portion is formed of a member having a ratio M100/Re of a 100% modulus M100 (MPa) to a rebound resilience Re (%) of 0.25 or more, the rebound resilience Re of less than 25%, and a tensile stress at a 200% strain of 15 MPa or more.

### SUMMARY OF THE INVENTION

An object of the present disclosure is to provide an electrophotographic photoreceptor in which image defects are less likely to occur until the end of the life even in a case where the electrophotographic photoreceptor is used in a high-stress condition.

Specific methods for achieving the above-described object include the following aspects. Each formula is the same as the formula having the same number described later.
<1> According to a first aspect of the present disclosure, there is provided an electrophotographic photoreceptor including a conductive substrate, and a photosensitive layer disposed on the conductive substrate, in which an outermost surface layer contains a charge transport material, a polyarylate resin having a dicarboxylic acid unit represented by Formula (A) and a diol unit represented by Formula (B), a polycarbonate resin, and a phenolic compound having 3 or fewer phenolic functional groups and a molecular weight of 300 or more, and a value of a dielectric loss tangent tanδ of the outermost surface layer at a frequency of 1 Hz is 0.50 or less.
<2> According to a second aspect of the present disclosure, there is provided the electrophotographic photoreceptor according to <1>, in which the value of the dielectric loss tangent tanδ of the outermost surface layer at a frequency of 1 Hz may be 0.40 or less.
<3> According to a third aspect of the present disclosure, there is provided the electrophotographic photoreceptor according to <1> or <2>, in which the phenolic compound may include a phenolic compound having 2 or fewer phenolic functional groups and a molecular weight of 350 or more.
<4> According to a fourth aspect of the present disclosure, there is provided the electrophotographic photoreceptor according to any one of <1> to <3>, in which the dicarboxylic acid unit represented by Formula (A) may include at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), a dicarboxylic acid unit (A4) represented by Formula (A4), and a dicarboxylic acid unit (A5) represented by Formula (A5).
<5> According to a fifth aspect of the present disclosure, there is provided the electrophotographic photoreceptor according to any one of <1> to <4>, in which the diol unit represented by Formula (B) may include at least one selected from the group consisting of a diol unit (B1) represented by Formula (B1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8).
<6> According to a sixth aspect of the present disclosure, there is provided the electrophotographic photoreceptor according to any one of <1> to <5>, in which the polyarylate resin and the polycarbonate resin each may have a constitutional unit including biphenyl represented by Formula (BP).
<7> According to a seventh aspect of the present disclosure, there is provided the electrophotographic photoreceptor according to any one of <1> to <6>, in which a proportion of the polyarylate resin in a total amount of the polyarylate resin and the polycarbonate resin contained in the outermost surface layer may be 25% by mass or more and 75% by mass or less.
<8> According to an eighth aspect of the present disclosure, there is provided the electrophotographic photoreceptor according to any one of <1> to <7>, in which the photosensitive layer may include a charge generation layer and a charge transport layer, and the charge transport layer may be the outermost surface layer.
<9> According to a ninth aspect of the present disclosure, there is provided a process cartridge including the electrophotographic photoreceptor according to any one of <1> to <8>, in which the process cartridge may be attachable to and detachable from an image forming apparatus.
<10> According to a tenth aspect of the present disclosure, there is provided an image forming apparatus including the electrophotographic photoreceptor according to any one of <1> to <8>, a charging device that charges a surface of the electrophotographic photoreceptor, an electrostatic latent image forming device that forms an electrostatic latent image on the charged surface of the electrophotographic photoreceptor, a developing device that develops the electrostatic latent image formed on the surface of the electrophotographic photoreceptor with a developer containing a toner to form a toner image, and a transfer device that transfers the toner image to a surface of a recording medium.
<11> According to an eleventh aspect of the present disclosure, there is provided the image forming apparatus according to <10>, further including a cleaning device that has a cleaning blade coming into contact with the surface of the electrophotographic photoreceptor and cleans the surface of the electrophotographic photoreceptor.
<12> According to a twelfth aspect of the present disclosure, there is provided the image forming apparatus according to <11>, in which a contact portion of the cleaning blade coming into contact with the electrophotographic photoreceptor may contain a polyurethane rubber obtained by polymerizing at least a polyol component and a polyisocyanate component, and the contact portion may be formed of a member having a ratio M100/Re of a 100% modulus M100 (MPa) to a rebound resilience Re (%) of 0.25 or more, the rebound resilience Re of less than 25%, and a tensile stress at a 200% strain of 15 MPa or more.
<13> According to a thirteenth aspect of the present disclosure, there is provided the image forming apparatus according to <12>, in which the ratio M100/Re may be 0.28 or more and 1.0 or less.

According to <1>, <4>, <5>, <6>, <7>, or <8>, an electrophotographic photoreceptor is provided in which, as compared with a case where the outermost surface layer contains a phenolic compound having 4 phenolic functional groups and does not contain a phenolic compound having 3 or fewer phenolic functional groups, or a case where a value of a dielectric loss tangent tanδ of the outermost surface layer at a frequency of 1 Hz is more than 0.50, image defects are less likely to occur until the end of the life even in a case where the electrophotographic photoreceptor is used in a high-stress condition.

According to <2>, an electrophotographic photoreceptor is provided in which, as compared with a case where a value of a dielectric loss tangent tanδ of the outermost surface layer at a frequency of 1 Hz is more than 0.40, image defects are less likely to occur until the end of the life even in a case where the electrophotographic photoreceptor is used in a high-stress condition.

According to <3>, an electrophotographic photoreceptor is provided in which, as compared with a case where the outermost surface layer contains a phenolic compound having three phenolic functional groups and does not contain a phenolic compound having two phenolic functional groups, image defects are less likely to occur until the end of the life even in a case where the electrophotographic photoreceptor is used in a high-stress condition.

According to <9>, a process cartridge is provided in which, as compared with a case where the outermost surface layer of the electrophotographic photoreceptor contains a phenolic compound having 4 phenolic functional groups and does not contain a phenolic compound having 3 or fewer phenolic functional groups, or a case where a value of a dielectric loss tangent tanδ of the outermost surface layer of the electrophotographic photoreceptor at a frequency of 1 Hz is more than 0.50, image defects are less likely to occur until the end of the life even in a case where the electrophotographic photoreceptor is used in a high-stress condition.

According to <10> or <11>, an image forming apparatus is provided in which, as compared with a case where the outermost surface layer of the electrophotographic photoreceptor contains a phenolic compound having 4 phenolic functional groups and does not contain a phenolic compound having 3 or fewer phenolic functional groups, or a case where a value of a dielectric loss tangent tanδ of the outermost surface layer of the electrophotographic photoreceptor at a frequency of 1 Hz is more than 0.50, image defects are less likely to occur until the end of the life even in a case where the electrophotographic photoreceptor is used in a high-stress condition.

According to <12>, an image forming apparatus is provided in which, as compared with an image forming apparatus in which a ratio M100/Re of a cleaning blade is less than 0.25, a rebound resilience Re is 25% or more, or a tensile stress is less than 15 MPa, image defects are less likely to occur until the end of the life even in a case where the electrophotographic photoreceptor is used in a high-stress condition.

According to <13>, an image forming apparatus is provided in which, as compared with an image forming apparatus in which a ratio M100/Re of a cleaning blade is less than 0.28 or more than 1.0, image defects are less likely to occur until the end of the life even in a case where the electrophotographic photoreceptor is used in a high-stress condition.

### BRIEF DESCRIPTION OF THE DRAWINGS

Exemplary embodiment(s) of the present invention will be described in detail based on the following figures, wherein:
FIG. 1 is a partial cross-sectional view showing an example of a layer configuration of an electrophotographic photoreceptor according to a first exemplary embodiment;
FIG. 2 is a partial cross-sectional view showing an example of a layer configuration of an electrophotographic photoreceptor according to a second exemplary embodiment;
FIG. 3 is a schematic configuration view showing an example of an image forming apparatus according to the present exemplary embodiment;
FIG. 4 is a schematic configuration view showing a configuration of another example of the image forming apparatus according to the present exemplary embodiment;
FIG. 5 is a schematic configuration view showing an example of a cleaning blade according to the present exemplary embodiment;
FIG. 6 is a schematic configuration view showing another example of a cleaning blade according to the present exemplary embodiment; and
FIG. 7 is a schematic configuration view showing another example of a cleaning blade according to the present exemplary embodiment.

### DETAILED DESCRIPTION OF THE INVENTION

The exemplary embodiments of the present disclosure will be described below. The following descriptions and examples merely illustrate the exemplary embodiments, and do not limit the scope of the exemplary embodiments.

In the present disclosure, a numerical range described using "to" represents a range including numerical values listed before and after "to" as the minimum value and the maximum value respectively.

Regarding the numerical ranges described in stages in the present disclosure, the upper limit or lower limit of a numerical range may be replaced with the upper limit or lower limit of another numerical range described in stages. Furthermore, in the present disclosure, the upper limit or lower limit of a numerical range may be replaced with values described in examples.

In the present disclosure, "A and/or B" is synonymous with "at least one of A or B". That is, "A and/or B" means that A alone may be used, B alone may be used, or a combination of A and B may be used.

In the present disclosure, the term "step" includes not only an independent step but a step that is not clearly distinguished from other steps as long as the purpose of the step is achieved.

In the present disclosure, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present disclosure, each component may include a plurality of corresponding substances. In a case where the amount of each component in a composition is mentioned in the present disclosure, and there are two or more kinds of substances corresponding to each component in the composition, unless otherwise specified, the amount of each component means the total amount of two or more kinds of the substances present in the composition.

In the present disclosure, each component may include two or more kinds of corresponding particles. In a case where a plurality of kinds of particles corresponding to each component are present in a composition, the particle diameter of each component indicates the value of a mixture of the plurality of kinds of particles present in the composition, unless otherwise specified.

In the present disclosure, an alkyl group and an alkylene group include all linear, branched, and cyclic shapes unless otherwise specified.

In the present disclosure, a hydrogen atom in an organic group, an aromatic ring, a linking group, an alkyl group, an alkylene group, an aryl group, an aralkyl group, an alkoxy group, an aryloxy group, and the like may be substituted with a halogen atom.

In the present disclosure, in a case where a compound is represented by a structural formula, the compound may be represented by a structural formula in which symbols representing a carbon atom and a hydrogen atom (C and H) in a hydrocarbon group and/or a hydrocarbon chain are omitted.

In the present disclosure, "constitutional unit" of a copolymer or a resin is the same as a monomer unit.

### <Electrophotographic Photoreceptor>

An electrophotographic photoreceptor (hereinafter, also referred to as "photoreceptor") according to the present exemplary embodiment includes a conductive substrate, and a photosensitive layer disposed on the conductive substrate.

According to an example of the exemplary embodiment, the photoreceptor includes a lamination-type photosensitive layer in which a charge generation layer and a charge transport layer are laminated, the charge transport layer is the outermost surface layer, and the charge transport layer constitutes an outer peripheral surface of the photoreceptor.

According to another example of the exemplary embodiment, the photoreceptor includes a single-layer type photosensitive layer, the single-layer type photosensitive layer is the outermost surface layer, and the single-layer type photosensitive layer constitutes an outer peripheral surface of the photoreceptor.

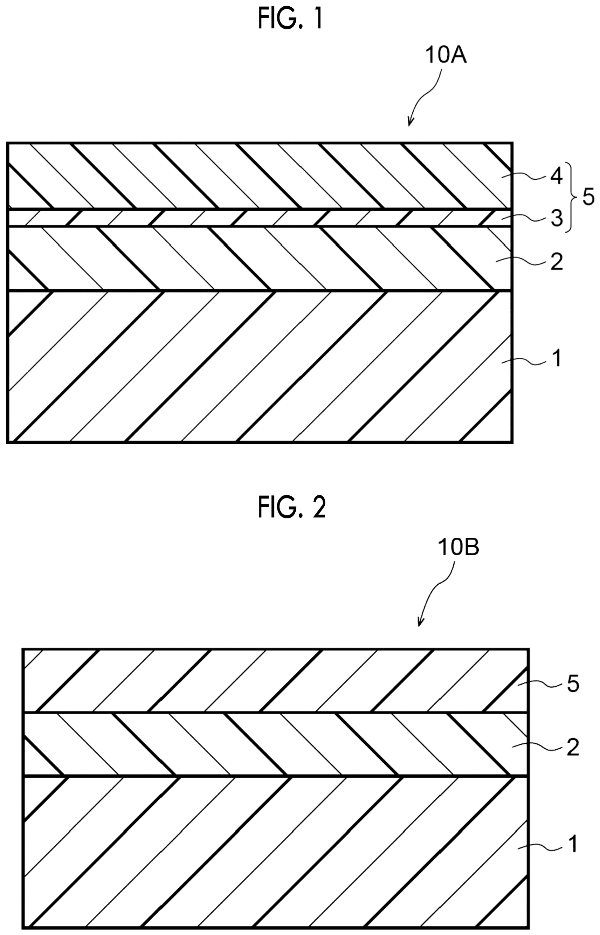

FIG. 1 is a partial cross-sectional view schematically showing an example of a layer configuration of the photoreceptor according to the present exemplary embodiment. A photoreceptor 10A shown in FIG. 1 includes a lamination-type photosensitive layer. The photoreceptor 10A has a structure in which an undercoat layer 2, a charge generation layer 3, and a charge transport layer 4 are laminated in this order on a conductive substrate 1, and the charge generation layer 3 and the charge transport layer 4 constitute a photosensitive layer 5 (so-called function separation-type photosensitive layer). The photoreceptor 10A may include an interlayer (not shown) between the undercoat layer 2 and the charge generation layer 3. The undercoat layer 2 may or may not be provided.

FIG. 2 is a partial cross-sectional view schematically showing another example of the layer configuration of the photoreceptor according to the present exemplary embodiment. A photoreceptor 10B shown in FIG. 2 includes a single-layer type photosensitive layer. The photoreceptor 10B has a structure in which the undercoat layer 2 and the photosensitive layer 5 are laminated in this order on the conductive substrate 1. The photoreceptor 10B may include an interlayer (not shown) between the undercoat layer 2 and the photosensitive layer 5. The undercoat layer 2 may or may not be provided.

In the electrophotographic photoreceptor according to the present exemplary embodiment, an outermost surface layer contains a charge transport material, a polyarylate resin having a dicarboxylic acid unit represented by Formula (A) and a diol unit represented by Formula (B), a polycarbonate resin, and a phenolic compound having 3 or fewer phenolic functional groups and a molecular weight of 300 or more, and a value of a dielectric loss tangent tanδ of the outermost surface layer at a frequency of 1 Hz is 0.50 or less.

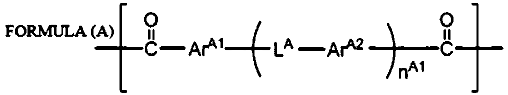

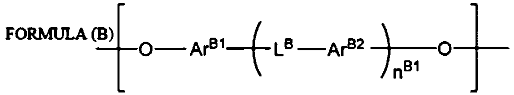

In Formula (A), Ar^{A1} and Ar^{A2} are each independently an aromatic ring which may have a substituent, L^{A} is a single bond or a divalent linking group, and n^{A1} is 0, 1, or 2.

In Formula (B), Ar^{B1} and Ar^{B2} are each independently an aromatic ring which may have a substituent, L^{B} is a single bond, an oxygen atom, a sulfur atom, or -C(Rb¹)(Rb²)-, and n^{B1} is 0, 1, or 2. Where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

In the present disclosure, the polyarylate resin having the dicarboxylic acid unit represented by Formula (A) and the diol unit represented by Formula (B) is referred to as a "polyarylate resin (PA)", the dicarboxylic acid unit represented by Formula (A) is referred to as a "dicarboxylic acid unit (A)", and the diol unit represented by Formula (B) is referred to as a "diol unit (B)".

In the present disclosure, the phenolic functional group of the phenolic compound means a hydroxy group bonded to a benzene ring.

In the photoreceptor according to the present exemplary embodiment, image defects are less likely to occur until the end of the life even in a case where the electrophotographic photoreceptor is used in a high-stress condition. The mechanism is presumed as follows.

In the polyarylate resin (PA), resin molecules are bonded to each other by an intermolecular force due to stacking of aromatic rings, and thus the abrasion resistance of the outermost surface layer is improved.

However, the polyarylate resin (PA) has a high molecular polarity, and the value of the dielectric loss tangent tanδ of the outermost surface layer at a frequency of 1 Hz is relatively large. In a case where the value of the dielectric loss tangent tanδ of the outermost surface layer at a frequency of 1 Hz is large, the degree of thermal vibration is large, and cracks occur in the outermost surface layer or oxidation deterioration of the outermost surface layer is promoted.

On the other hand, the outermost surface layer containing a polycarbonate resin has a relatively small value of the dielectric loss tangent tanδ at a frequency of 1 Hz and has a small degree of thermal vibration, but has lower mechanical strength as compared with the outermost surface layer containing the polyarylate resin (PA), and thus cracks may occur.

In a case where the polyarylate resin (PA) and the polycarbonate resin are used in combination in the outermost surface layer, the value of the dielectric loss tangent tanδ of the outermost surface layer at a frequency of 1 Hz is moderate, the degree of thermal vibration is suppressed, and the cracks and the oxidation deterioration of the outermost surface layer are suppressed.

Further, it is effective to add a phenol-based antioxidant in order to suppress the oxidation deterioration of the outermost surface layer, and in order to avoid increasing the value of the dielectric loss tangent tanδ of the outermost surface layer at a frequency of 1 Hz, the number of phenolic functional groups that are the cause of the molecular polarity is 3 or less, and a phenolic compound having a molecular weight of 300 or more, which relaxes the polarity of the phenolic functional group, is contained in the outermost surface layer.

Therefore, in the photoreceptor according to the present exemplary embodiment, image defects are less likely to occur until the end of the life even in a case where the electrophotographic photoreceptor is used in a high-stress condition.

### [Outermost Surface Layer]

The outermost surface layer of the photoreceptor contains a charge transport material, a polyarylate resin (PA), a polycarbonate resin, and a phenolic compound having 3 or fewer phenolic functional groups and a molecular weight of 300 or more, and has a value of a dielectric loss tangent tanδ at a frequency of 1 Hz of 0.50 or less.

The value of the dielectric loss tangent tanδ of the outermost surface layer at a frequency of 1 Hz is measured by the following method.

The outermost surface layer is peeled off from the photoreceptor. The peeled outermost surface layer is dissolved in tetrahydrofuran, applied onto an ITO substrate, and dried at a temperature of 143°C for 30 minutes to form a film having a thickness of 7 µm. A gold electrode is formed on an outer surface of the film by a vacuum vapor deposition method, and the film is used as a measurement sample.

A solution having the same component composition and solid content composition as the outermost surface layer (specifically, a coating solution for forming the outermost surface layer in a case of manufacturing the photoreceptor) is prepared, and the solution is applied onto the ITO substrate to form the film and the gold electrode in the same manner as described above, so that a measurement sample can be obtained.

An impedance measuring device (for example, an impedance analyzer 1260 manufactured by Solartron Analytical) is connected to the gold electrode and the ITO substrate, and the impedance is measured under the following measurement conditions to obtain the dielectric loss tangent tanδ at a frequency of 1 Hz.
Measurement environment: temperature of 22°C and relative humidity of 50%
Direct current applied voltage: 0 V
Alternating current applied voltage: ±1 V
Frequency: sweep from 0.1 Hz to 10 kHz

From the viewpoint of suppressing deterioration of the outermost surface layer, the value of the dielectric loss tangent tanδ of the outermost surface layer at a frequency of 1 Hz is, for example, preferably a lower value, preferably 0.40 or less, more preferably 0.35 or less, still more preferably 0.30 or less, and most preferably 0.25 or less.

The value of the dielectric loss tangent tanδ of the outermost surface layer at a frequency of 1 Hz can be controlled by a mixing ratio of the polyarylate resin (PA) and the polycarbonate resin and a content of the phenolic compound. The mixing ratio of the polyarylate resin (PA) and the polycarbonate resin and the content of the phenolic compound are, for example, preferably in ranges described later. Examples of the other control methods include an increase and a decrease in a drying temperature and/or a drying time in a case of forming the outermost surface layer.

Examples of the charge transport material contained in the outermost surface layer include the same compound as the charge transport material contained in the charge transport layer described later. For example, the same applies to the preferred compound.

From the viewpoint of controlling the dielectric loss tangent tanδ of the outermost surface layer at a frequency of 1 Hz, a proportion of the polyarylate resin (PA) in a total amount of the polyarylate resin (PA) and the polycarbonate resin contained in the outermost surface layer is, for example, preferably 20% by mass or more and 80% by mass or less, more preferably 25% by mass or more and 75% by mass or less, and still more preferably 30% by mass or more and 70% by mass or less.

As the polycarbonate resin, for example, a polycarbonate resin in which constitutional units having an aromatic ring are continuous is preferable. In the polycarbonate resin, resin molecules are bonded to each other by an intermolecular force due to stacking of aromatic rings, and thus the abrasion resistance of the outermost surface layer is improved. For example, preferred aspects of the polycarbonate resin include, specifically, the polycarbonate resin disclosed in JP2023-121553A. For example, a polycarbonate resin used in Examples described later is shown as a more preferred form of the polycarbonate resin.

As a combination of the polyarylate resin (PA) and the polycarbonate resin, for example, a combination of resins each having a constitutional unit containing a biphenyl represented by Formula (BP) is preferable.

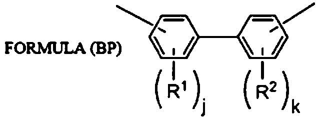

In Formula (BP), j is an integer of 0 or greater and 4 or less, j pieces of R¹'s are each independently a methyl group or an ethyl group, k is an integer of 0 or greater and 4 or less, and k pieces of R²'s are each independently a methyl group or an ethyl group.

The biphenyl represented by Formula (BP) may be an entire structure or a part of a structure obtained by removing an ester bond (-C(=O)O-) or a carbonate bond (-OC(=O)O-) from the constitutional unit including the biphenyl represented by Formula (BP). In other words, the right end and the left end of the biphenyl represented by Formula (BP) may be each independently bonded to an ester bond or a carbonate bond directly or bonded to an ester bond or a carbonate bond via another atom or an atomic group.

j is an integer of 0 or greater and 4 or less, for example, preferably an integer of 0 or greater and 3 or less, more preferably an integer of 0 or greater and 2 or less, still more preferably 0 or 1, and particularly preferably 0.

In a case where j is an integer of 1 or greater, j pieces of R¹'s are each independently a methyl group or an ethyl group and, for example, preferably a methyl group.

k is an integer of 0 or greater and 4 or less, for example, preferably an integer of 0 or greater and 3 or less, more preferably an integer of 0 or greater and 2 or less, still more preferably 0 or 1, and particularly preferably 0.

In a case where k is an integer of 1 or greater, k pieces of R²'s are each independently a methyl group or an ethyl group and, for example, preferably a methyl group.

The biphenyl represented by Formula (BP) is, for example, preferably 4,4'-biphenyl with respect to a linking position in a main chain.

As a combination of the polyarylate resin (PA) and the polycarbonate resin, for example, a combination of a polyarylate resin (PA) having at least one of a dicarboxylic acid unit (A2-3) or a diol unit (B7-1) and a polycarbonate resin having a constitutional unit (Cb7-1) is particularly preferable.

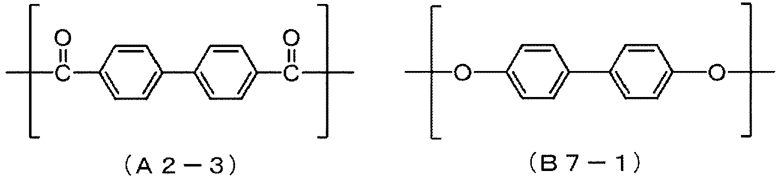

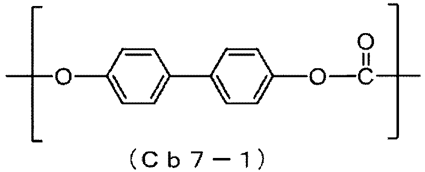

From the viewpoint of suppressing molecular polarity, in the phenolic compound having 3 or fewer phenolic functional groups and a molecular weight of 300 or more, for example, it is preferable that the number of phenolic functional groups is small and the molecular weight is large.

The number of phenolic functional groups in the phenolic compound is 3 or fewer, and for example, preferably 1 or 2. The molecular weight of the phenolic compound is 300 or more, and for example, preferably 350 or more, more preferably 400 or more, and still more preferably 450 or more. From the viewpoint of easy dispersion in the outermost surface layer, the upper limit of the molecular weight of the phenolic compound is, for example, preferably 1,000 or less, more preferably 900 or less, and still more preferably 800 or less.

The phenolic compound is, for example, preferably a phenolic compound having 2 or fewer phenolic functional groups and a molecular weight of 350 or more, preferably a phenolic compound having 2 or fewer phenolic functional groups and a molecular weight of 350 or more and 1,000 or less, more preferably a phenolic compound having 2 or fewer phenolic functional groups and a molecular weight of 400 or more and 900 or less, and still more preferably a phenolic compound having 2 or fewer phenolic functional groups and a molecular weight of 450 or more and 800 or less.

In the present disclosure, the phenolic functional group of the phenolic compound means a hydroxy group bonded to a benzene ring.

Examples of the phenolic compound having 3 or fewer phenolic functional groups and a molecular weight of 300 or more include a hindered phenolic compound. The hindered phenolic compound is generally a compound in which at least one of ortho-positions of a hydroxy group of phenol is substituted with a bulky group, the compound exhibiting an oxidation inhibiting action of a composition. The hindered phenolic compound may be used alone or in combination of two or more kinds thereof.

Examples of the hindered phenolic compound include the following.
· Alkylated monophenolic compounds and derivatives thereof: for example, octyl-3,5-di-t-butyl-4-hydroxy-hydrocinnamate
· Alkyl thiomethyl phenolic compounds and derivatives thereof: for example, 2,4-dioctylthiomethyl-6-t-butylphenol, 2,4-dioctylthiomethyl-6-methylphenol, 2,4-dioctylthiomethyl-6-ethylphenol, and 2,6-didodecylthiomethyl-4-nonylphenol
· Alkylidene bisphenolic compound and derivative thereof: for example, 4,4'-butylidenebis(6-t-butyl-3-methylphenol), 2,2'-methylenebis(6-t-butyl-4-methylphenol), 2,2'-methylenebis(6-t-butyl-4-ethylphenol), 2-t-butyl-6-(3-t-butyl-2-hydroxy-5-methylbenzyl)-4-methylphenyl acrylate, and 3,9-bis[2-[3-(3-t-butyl-4-hydroxy-5-methylphenyl)propionyloxy]-1,1-dimethylethyl]-2,4,8,10-tetraoxaspiro[5.5]undecane

Examples of a commercially available product of the hindered phenolic compound include "ADEKA STAB AO-80", "ADEKA STAB AO-50", "ADEKA STAB AO-40", "ADEKA STAB AO-30", "ADEKA STAB AO-20", and "ADEKA STAB AO-330" manufactured by ADEKA Corporation; "Irganox 245", "Irganox 1076", and "Irganox 1520" manufactured by BASF Japan Ltd.; and "Sumilizer GA-80", "Sumilizer GM", and "Sumilizer GS" manufactured by Sumitomo Chemical Co., Ltd.

From the viewpoint of promoting phase separation of two or more kinds of resins during the formation of the outermost surface layer and forming a fine phase separation structure in the outermost surface layer, a content of the phenolic compound contained in the outermost surface layer is, for example, preferably 0.1% by mass or more and 20% by mass or less, more preferably 0.5% by mass or more and 10% by mass or less, and still more preferably 1% by mass or more and 5% by mass or less with respect to a total mass of the outermost surface layer.

In the outermost surface layer of the photoreceptor, for example, a proportion of the fluororesin particles in the layer is preferably 5% by mass or less, more preferably 1% by mass or less, and still more preferably 0% by mass (that is, the outermost surface layer does not contain the fluororesin particles).

Since there is a high possibility that the regulations on manufacturing and use of the organic fluorine compounds are strengthened in the future, for example, a content of the fluororesin particles is preferably within the above-described range.

A layer thickness of the outermost surface layer may be set according to a function of the layer.

In a case where the charge transport layer is the outermost surface layer, the layer thickness of the outermost surface layer is, for example, preferably 5 µm or more and 50 µm or less, more preferably 8 µm or more and 45 µm or less, and still more preferably 10 µm or more and 40 µm or less.

In a case where the single-layer type photosensitive layer is the outermost surface layer, the layer thickness of the outermost surface layer is, for example, preferably 5 µm or more and 50 µm or less, more preferably 8 µm or more and 45 µm or less, and still more preferably 10 µm or more and 40 µm or less.

A method of forming the outermost surface layer is the same as a method of forming the charge transport layer and a method of forming the single-layer type photosensitive layer, which will be described later.

### [Polyarylate Resin (PA)]

The polyarylate resin (PA) has at least the dicarboxylic acid unit (A) and the diol unit (B).

The dicarboxylic acid unit (A) is a constitutional unit represented by Formula (A).

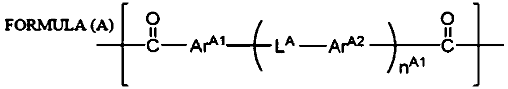

In Formula (A), Ar^{A1} and Ar^{A2} are each independently an aromatic ring which may have a substituent, L^{A} is a single bond or a divalent linking group, and n^{A1} is 0, 1, or 2.

The aromatic ring as Ar^{A1} may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as Ar^{A1} may be substituted with an alkyl group, an aryl group, an aralkyl group, an alkoxy group, an aryloxy group, a halogen atom, or the like. As the substituent in a case where the aromatic ring as Ar^{A1} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The aromatic ring as Ar^{A2} may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as Ar^{A2} may be substituted with an alkyl group, an aryl group, an aralkyl group, an alkoxy group, an aryloxy group, a halogen atom, or the like. As the substituent in a case where the aromatic ring as Ar^{A2} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

In a case where L^{A} is a divalent linking group, examples of the divalent linking group include an oxygen atom, a sulfur atom, and -C(Ra¹)(Ra²)-. Here, Ra¹ and Ra² are each independently a hydrogen atom, an alkyl group having 1 or more and 10 or less carbon atoms, an aryl group having 6 or more and 12 or less carbon atoms, or an aralkyl group having 7 or more and 20 or less carbon atoms, and Ra¹ and Ra² may be bonded to each other to form a cyclic alkyl group.

The alkyl group having 1 or more and 10 or less carbon atoms, as Ra¹ and Ra², may be linear, branched, or cyclic. The number of carbon atoms of the alkyl group is, for example, preferably 1 or more and 6 or less, more preferably 1 or more and 4 or less, and still more preferably 1 or 2.

The aryl group having 6 or more and 12 or less carbon atoms, as Ra¹ and Ra², may be a monocycle or a polycycle. The number of carbon atoms of the aryl group is, for example, preferably 6 or more and 10 or less and more preferably 6.

An alkyl group of the aralkyl group having 7 or more and 20 or less carbon atoms, as Ra¹ and Ra², may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2.

An aryl group of the aralkyl group having 7 or more and 20 or less carbon atoms, as Ra¹ and Ra², may be a monocycle or a polycycle. The number of carbon atoms of the aryl group is, for example, preferably 6 or more and 10 or less and more preferably 6.

The dicarboxylic acid unit (A) preferably includes, for example, at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), a dicarboxylic acid unit (A4) represented by Formula (A4), and a dicarboxylic acid unit (A5) represented by Formula (A5). The dicarboxylic acid unit (A) includes, for example, more preferably at least one selected from the group consisting of a dicarboxylic acid unit (A2), a dicarboxylic acid unit (A3), and a dicarboxylic acid unit (A4) and still more preferably a dicarboxylic acid unit (A2).

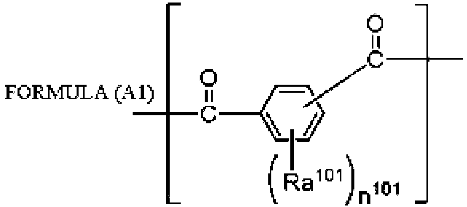

In Formula (A1), n¹⁰¹ is an integer of 0 or greater and 4 or less, and n¹⁰¹ pieces of Ra¹⁰¹'s are each independently an alkyl group having 1 or more and 10 or less carbon atoms, an aryl group having 6 or more and 12 or less carbon atoms, or an alkoxy group having 1 or more and 6 or less carbon atoms.

n¹⁰¹ is, for example, preferably 0, 1, or 2, more preferably 0 or 1, and still more preferably 0.

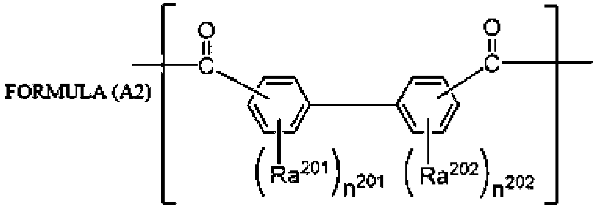

In Formula (A2), n²⁰¹ and n²⁰² are each independently an integer of 0 or greater and 4 or less, and n²⁰¹ pieces of Ra²⁰¹'s and n²⁰² pieces of Ra²⁰²'s are each independently an alkyl group having 1 or more and 10 or less carbon atoms, an aryl group having 6 or more and 12 or less carbon atoms, or an alkoxy group having 1 or more and 6 or less carbon atoms.

n²⁰¹ represents, for example, preferably 0, 1, or 2, more preferably 0 or 1, and still more preferably 0.

n²⁰² represents, for example, preferably 0, 1, or 2, more preferably 0 or 1, and still more preferably 0.

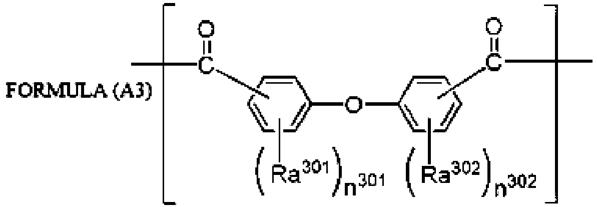

In Formula (A3), n³⁰¹ and n³⁰² are each independently an integer of 0 or greater and 4 or less, and n³⁰¹ pieces of Ra³⁰¹'s and n³⁰² pieces of Ra³⁰²'s are each independently an alkyl group having 1 or more and 10 or less carbon atoms, an aryl group having 6 or more and 12 or less carbon atoms, or an alkoxy group having 1 or more and 6 or less carbon atoms.

n³⁰¹ is, for example, preferably 0, 1, or 2, more preferably 0 or 1, and still more preferably 0.

n³⁰² is, for example, preferably 0, 1, or 2, more preferably 0 or 1, and still more preferably 0.

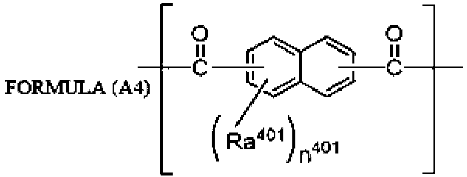

In Formula (A4), n⁴⁰¹ is an integer of 0 or greater and 6 or less, and n⁴⁰¹ pieces of Ra⁴⁰¹'s are each independently an alkyl group having 1 or more and 10 or less carbon atoms, an aryl group having 6 or more and 12 or less carbon atoms, or an alkoxy group having 1 or more and 6 or less carbon atoms.

n⁴⁰¹ represents, for example, preferably an integer of 0 or greater and 4 or less, more preferably 0, 1, or 2, and still more preferably 0.

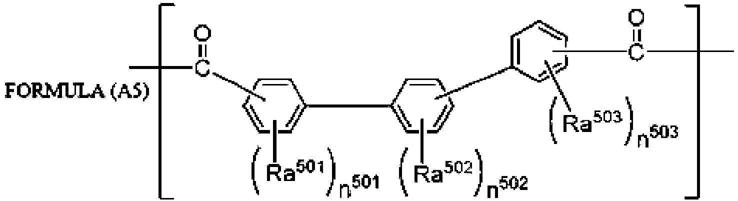

In Formula (A5), n⁵⁰¹, n⁵⁰², and n⁵⁰³ are each independently an integer of 0 or greater and 4 or less, and n⁵⁰¹ pieces of Ra⁵⁰¹'s, n⁵⁰² pieces of Ra⁵⁰²'s, and n⁵⁰³ pieces of Ra⁵⁰³'s are each independently an alkyl group having 1 or more and 10 or less carbon atoms, an aryl group having 6 or more and 12 or less carbon atoms, or an alkoxy group having 1 or more and 6 or less carbon atoms.

n⁵⁰¹ represents, for example, preferably 0, 1, or 2, more preferably 0 or 1, and still more preferably 0.

n⁵⁰² represents, for example, preferably 0, 1, or 2, more preferably 0 or 1, and still more preferably 0.

n⁵⁰³ represents, for example, preferably 0, 1, or 2, more preferably 0 or 1, and still more preferably 0.

The specific aspects and the preferred aspects of Ra¹⁰¹ in Formula (A1), Ra²⁰¹ and Ra²⁰² in Formula (A2), Ra³⁰¹ and Ra³⁰² in Formula (A3), Ra⁴⁰¹ in Formula (A4), and Ra⁵⁰¹, Ra⁵⁰², and Ra⁵⁰³ in Formula (A5) are the same as each other, and hereinafter, Ra¹⁰¹, Ra²⁰¹, Ra²⁰² , Ra³⁰¹ Ra³⁰², Ra⁴⁰¹, Ra⁵⁰¹, Ra⁵⁰², and Ra⁵⁰³ will be collectively referred to as "Ra".

The alkyl group having 1 or more and 10 or less carbon atoms as Ra may be linear, branched, or cyclic. The number of carbon atoms of the alkyl group is, for example, preferably 1 or more and 6 or less, more preferably 1 or more and 4 or less, and still more preferably 1 or 2.

Examples of the linear alkyl group having 1 or more and 10 or less carbon atoms include a methyl group, an ethyl group, a n-propyl group, a n-butyl group, a n-pentyl group, a n-hexyl group, a n-heptyl group, a n-octyl group, a n-nonyl group, and a n-decyl group.

Examples of the branched alkyl group having 3 or more and 10 or less carbon atoms include an isopropyl group, an isobutyl group, an sec-butyl group, a tert-butyl group, an isopentyl group, a neopentyl group, a tert-pentyl group, an isohexyl group, an sec-hexyl group, a tert-hexyl group, an isoheptyl group, an sec-heptyl group, a tert-heptyl group, an isooctyl group, an sec-octyl group, a tert-octyl group, an isononyl group, an sec-nonyl group, a tert-nonyl group, an isodecyl group, an sec-decyl group, and a tert-decyl group.

Examples of the cyclic alkyl group having 3 or more and 10 or less carbon atoms include a cyclopropyl group, a cyclobutyl group, a cyclopentyl group, a cyclohexyl group, a cycloheptyl group, a cyclooctyl group, a cyclononyl group, a cyclodecyl group, and polycyclic (for example, bicyclic, tricyclic, or spirocyclic) alkyl groups to which these monocyclic alkyl groups are linked.

The aryl group having 6 or more and 12 or less carbon atoms as Ra may be a monocycle or a polycycle. The number of carbon atoms of the aryl group is, for example, preferably 6 or more and 10 or less and more preferably 6.

Examples of the aryl group having 6 or more and 12 or less carbon atoms include a phenyl group, a biphenyl group, a 1-naphthyl group, and a 2-naphthyl group.

The alkyl group in the alkoxy group having 1 or more and 6 or less carbon atoms as Ra may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Hereinafter, dicarboxylic acid units (A1-1) to (A1-9) are shown as specific examples of the dicarboxylic acid unit (A1). The dicarboxylic acid unit (A1) is not limited thereto.

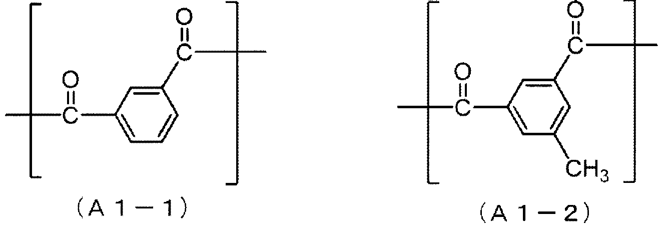

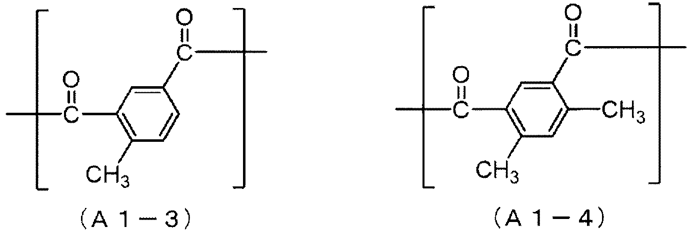

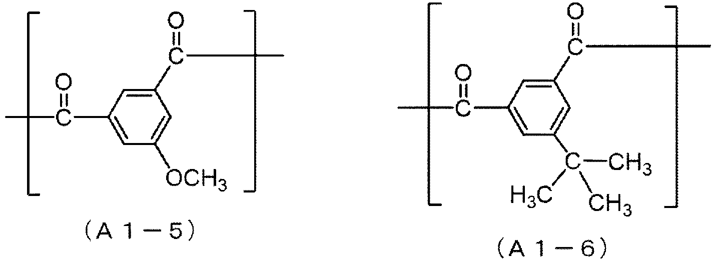

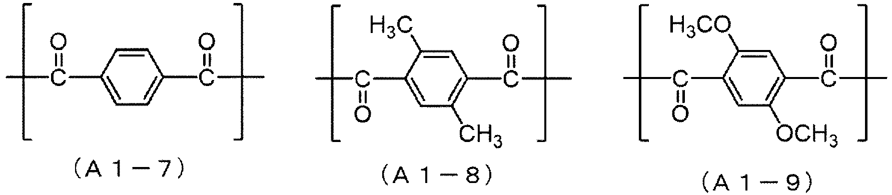

Hereinafter, dicarboxylic acid units (A2-1) to (A2-3) are shown as specific examples of the dicarboxylic acid unit (A2). The dicarboxylic acid unit (A2) is not limited thereto.

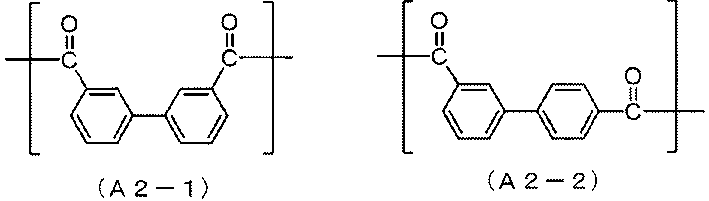

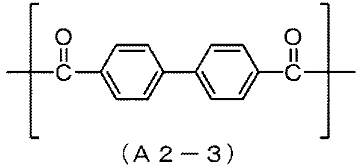

Hereinafter, dicarboxylic acid units (A3-1) and (A3-2) are shown as specific examples of the dicarboxylic acid unit (A3). The dicarboxylic acid unit (A3) is not limited thereto.

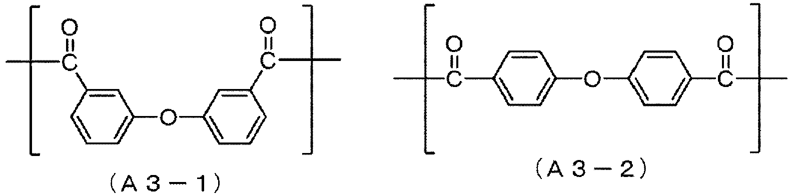

Hereinafter, dicarboxylic acid units (A4-1) to (A4-3) are shown as specific examples of the dicarboxylic acid unit (A4). The dicarboxylic acid unit (A4) is not limited thereto.

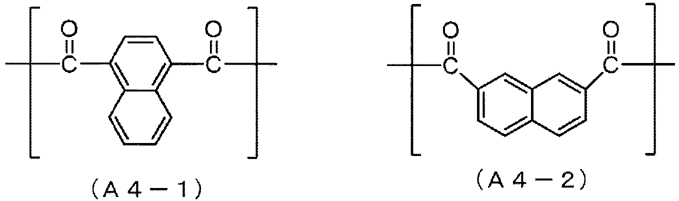

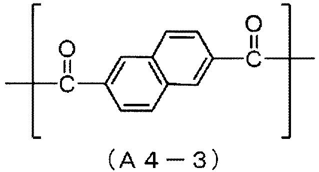

Hereinafter, dicarboxylic acid units (A5-1) to (A5-4) are shown as specific examples of the dicarboxylic acid unit (A5). The dicarboxylic acid unit (A5) is not limited thereto.

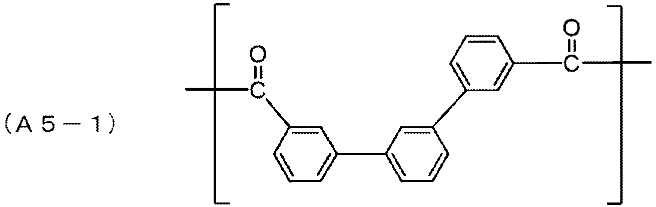

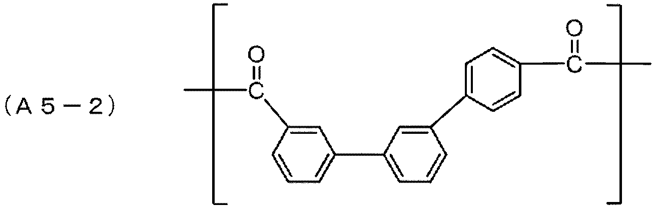

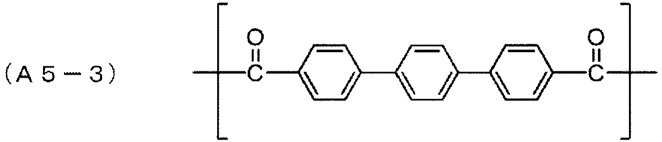

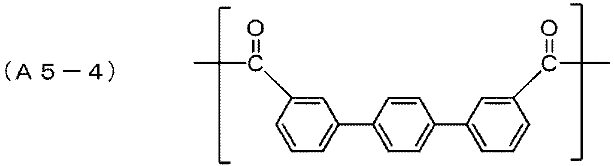

In the above-described specific examples, for example, at least one selected from the group consisting of (A1-1), (A1-7), (A2-3), (A3-2), and (A4-3) is preferably included, at least one selected from the group consisting of (A2-3), (A3-2), and (A4-3) is more preferably included, and at least (A2-3) is still more preferably included as the dicarboxylic acid unit (A).

The dicarboxylic acid unit (A) included in the polyarylate resin (PA) may be used alone or in combination of two or more kinds thereof.

A mass proportion of the dicarboxylic acid unit (A) in the polyarylate resin (PA) is, for example, preferably 15% by mass or more and 60% by mass or less.

In a case where the mass proportion of the dicarboxylic acid unit (A) is 15% by mass or more, the abrasion resistance of the outermost surface layer is enhanced. From the viewpoint, the mass proportion of the dicarboxylic acid unit (A) is, for example, more preferably 20% by mass or more, and still more preferably 25% by mass or more.

In a case where the mass proportion of the dicarboxylic acid unit (A) is 60% by mass or less, peeling of the outermost surface layer can be suppressed. From the viewpoint, the mass proportion of the dicarboxylic acid unit (A) is, for example, more preferably 55% by mass or less, and still more preferably 50% by mass or less.

The polyarylate resin (PA) may have other dicarboxylic acid units in addition to the dicarboxylic acid unit (A). Examples of other dicarboxylic acid units include aliphatic dicarboxylic acids (such as oxalic acid, malonic acid, maleic acid, fumaric acid, citraconic acid, itaconic acid, glutaconic acid, succinic acid, alkenyl succinic acid, adipic acid, and sebacic acid) units, alicyclic dicarboxylic acid (such as cyclohexanedicarboxylic acid) units, and lower alkyl ester units (for example, having 1 or more and 5 or less carbon atoms) thereof. The dicarboxylic acid units included in the polyarylate resin (PA) may be used alone or in combination of two or more kinds thereof.

The diol unit (B) is a constitutional unit represented by Formula (B).

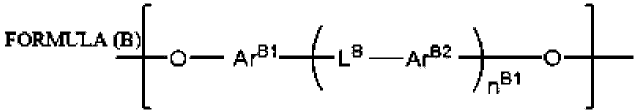

In Formula (B), Ar^{B1} and Ar^{B2} are each independently an aromatic ring which may have a substituent, L^{B} is a single bond, an oxygen atom, a sulfur atom, or -C(Rb¹)(Rb²)-, and n^{B1} is 0, 1, or 2. Where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

The aromatic ring as Ar^{B1} may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as Ar^{B1} may be substituted with an alkyl group, an aryl group, an aralkyl group, an alkoxy group, an aryloxy group, a halogen atom, or the like. As the substituent in a case where the aromatic ring as Ar^{B1} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The aromatic ring as Ar^{B2} may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as Ar^{B2} may be substituted with an alkyl group, an aryl group, an aralkyl group, an alkoxy group, an aryloxy group, a halogen atom, or the like. As the substituent in a case where the aromatic ring as Ar^{B2} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The alkyl group having 1 or more and 20 or less carbon atoms, as Rb¹ and Rb², may be linear, branched, or cyclic. The number of carbon atoms of the alkyl group is, for example, preferably 1 or more and 18 or less, more preferably 1 or more and 14 or less, and still more preferably 1 or more and 10 or less.

The aryl group having 6 or more and 12 or less carbon atoms, as Rb¹ and Rb², may be a monocycle or a polycycle. The number of carbon atoms of the aryl group is, for example, preferably 6 or more and 10 or less and more preferably 6.

An alkyl group of the aralkyl group having 7 or more and 20 or less carbon atoms, as Rb¹ and Rb², may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2.

An aryl group of the aralkyl group having 7 or more and 20 or less carbon atoms, as Rb¹ and Rb², may be a monocycle or a polycycle. The number of carbon atoms of the aryl group is, for example, preferably 6 or more and 10 or less and more preferably 6.

It is preferable that the diol unit (B) includes, for example, at least one selected from the group consisting of a diol unit (B1) represented by Formula (B1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8).

For example, the diol unit (B) more preferably includes at least one selected from the group consisting of the diol unit (B1) represented by Formula (B1), the diol unit (B2) represented by Formula (B2), the diol unit (B4) represented by Formula (B4), the diol unit (B5) represented by Formula (B5), and the diol unit (B6) represented by Formula (B6);
still more preferably includes at least one selected from the group consisting of the diol unit (B1) represented by Formula (B1), the diol unit (B2) represented by Formula (B2), the diol unit (B5) represented by Formula (B5), and the diol unit (B6) represented by Formula (B6);
even more preferably at least one selected from the group consisting of the diol unit (B1) represented by Formula (B1), the diol unit (B2) represented by Formula (B2), and the diol unit (B6) represented by Formula (B6); and
most preferably at least one selected from the group consisting of the diol unit (B1) represented by Formula (B1) and the diol unit (B2) represented by Formula (B2).

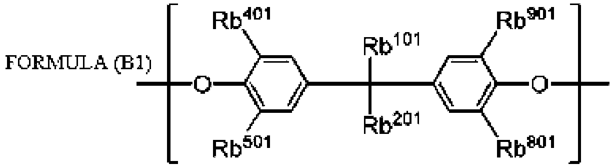

In Formula (B1), Rb¹⁰¹ is a branched alkyl group having 4 or more and 20 or less carbon atoms, Rb²⁰¹ is a hydrogen atom or an alkyl group having 1 or more and 3 or less carbon atoms, and Rb⁴⁰¹, Rb⁵⁰¹, Rb⁸⁰¹, and Rb⁹⁰¹ are each independently a hydrogen atom, an alkyl group having 1 or more and 4 or less carbon atoms, an alkoxy group having 1 or more and 6 or less carbon atoms, or a halogen atom.

The number of carbon atoms in the branched alkyl group having 4 or more and 20 or less carbon atoms, as Rb¹⁰¹, is, for example, preferably 4 or more and 16 or less, more preferably 4 or more and 12 or less, and still more preferably 4 or more and 8 or less. Specific examples of Rb¹⁰¹ include an isobutyl group, an sec-butyl group, a tert-butyl group, an isopentyl group, a neopentyl group, a tert-pentyl group, an isohexyl group, an sec-hexyl group, a tert-hexyl group, an isoheptyl group, an sec-heptyl group, a tert-heptyl group, an isooctyl group, an sec-octyl group, a tert-octyl group, an isononyl group, an sec-nonyl group, a tert-nonyl group, an isodecyl group, an sec-decyl group, a tert-decyl group, an isododecyl group, an sec-dodecyl group, a tert-dodecyl group, a tert-tetradecyl group, and a tert-pentadecyl group.

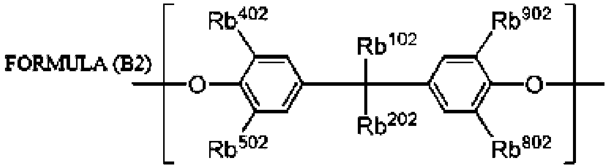

In Formula (B2), Rb¹⁰² is a linear alkyl group having 4 or more and 20 or less carbon atoms, Rb²⁰² is a hydrogen atom or an alkyl group having 1 or more and 3 or less carbon atoms, and Rb⁴⁰², Rb⁵⁰², Rb⁸⁰², and Rb⁹⁰² are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 4 or more and 20 or less carbon atoms, as Rb¹⁰², is, for example, preferably 4 or more and 16 or less, more preferably 4 or more and 12 or less, and still more preferably 4 or more and 8 or less. Specific examples of Rb¹⁰² include an n-butyl group, an n-pentyl group, an n-hexyl group, an n-heptyl group, an n-octyl group, an n-nonyl group, an n-decyl group, an n-undecyl group, an n-dodecyl group, a tridecyl group, an n-tetradecyl group, an n-pentadecyl group, an n-heptadecyl group, an n-octadecyl group, an n-nonadecyl group, and an n-icosyl group.

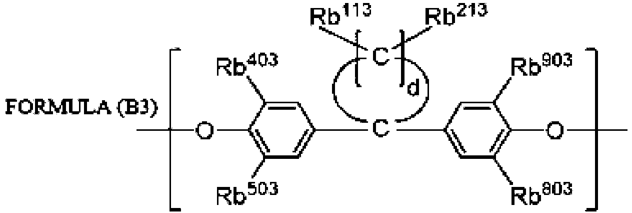

In Formula (B3), Rb¹¹³ and Rb²¹³ are each independently a hydrogen atom, a linear alkyl group having 1 or more and 3 or less carbon atoms, an alkoxy group having 1 or more and 4 or less carbon atoms, or a halogen atom, d is an integer of 7 or greater and 15 or less, and Rb⁴⁰³, Rb⁵⁰³, Rb⁸⁰³, and Rb⁹⁰³ are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 1 or more and 3 or less carbon atoms, as Rb¹¹³ and Rb²¹³, is, for example, preferably 1 or 2 and more preferably 1. Specific examples of such a group include a methyl group, an ethyl group, and an n-propyl group.

An alkyl group of the alkoxy group having 1 or more and 4 or less carbon atoms, as Rb¹¹³ and Rb²¹³, may be linear, branched, or cyclic. The number of carbon atoms in the alkyl group of the alkoxy group having 1 or more and 4 or less carbon atoms is, for example, preferably 1 or more and 3 or less, more preferably 1 or 2, and still more preferably 1. Specific examples of such a group include a methoxy group, an ethoxy group, an n-propoxy group, an n-butoxy group, an isopropoxy group, an isobutoxy group, an sec-butoxy group, a tert-butoxy group, a cyclopropoxy group, and a cyclobutoxy group.

Examples of the halogen atom as Rb¹¹³ and Rb²¹³ include a fluorine atom, a chlorine atom, a bromine atom, and an iodine atom.

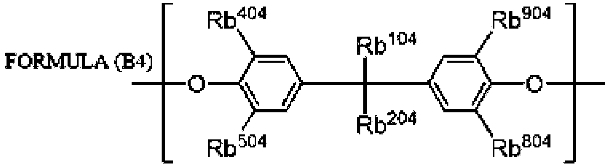

In Formula (B4), Rb¹⁰⁴ and Rb²⁰⁴ are each independently a hydrogen atom or an alkyl group having 1 or more and 3 or less carbon atoms, and Rb⁴⁰⁴, Rb⁵⁰⁴, Rb⁸⁰⁴, and Rb⁹⁰⁴ are each independently a hydrogen atom, an alkyl group having 1 or more and 4 or less carbon atoms, an alkoxy group having 1 or more and 6 or less carbon atoms, or a halogen atom.

The alkyl group having 1 or more and 3 or less carbon atoms, as Rb¹⁰⁴, may be linear, branched, or cyclic. The number of carbon atoms in the alkyl group is, for example, preferably 1 or 2 and more preferably 1. Specific examples of Rb¹⁰⁴ include a methyl group, an ethyl group, an n-propyl group, an isopropyl group, and a cyclopropyl group.

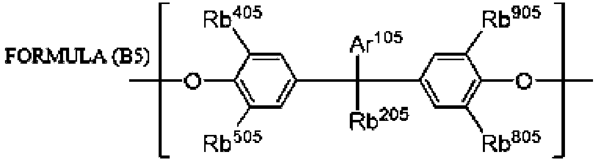

In Formula (B5), Ar¹⁰⁵ is an aryl group having 6 or more and 12 or less carbon atoms or an aralkyl group having 7 or more and 20 or less carbon atoms, Rb²⁰⁵ is a hydrogen atom or an alkyl group having 1 or more and 3 or less carbon atoms, and Rb⁴⁰⁵, Rb⁵⁰⁵, Rb⁸⁰⁵, and Rb⁹⁰⁵ are each independently a hydrogen atom, an alkyl group having 1 or more and 4 or less carbon atoms, an alkoxy group having 1 or more and 6 or less carbon atoms, or a halogen atom.

The aryl group having 6 or more and 12 or less carbon atoms, as Ar¹⁰⁵, may be a monocycle or a polycycle. The number of carbon atoms of the aryl group is, for example, preferably 6 or more and 10 or less and more preferably 6.

An alkyl group of the aralkyl group having 7 or more and 20 or less carbon atoms, as Ar¹⁰⁵, may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2. An aryl group of the aralkyl group having 7 or more and 20 or less carbon atoms, as Ar¹⁰⁵, may be a monocycle or a polycycle. The number of carbon atoms of the aryl group is, for example, preferably 6 or more and 10 or less and more preferably 6. Examples of the aralkyl group having 7 or more and 20 or less carbon atoms include a benzyl group, a phenylethyl group, a phenylpropyl group, a 4-phenylbutyl group, a phenylpentyl group, a phenylhexyl group, a phenylheptyl group, a phenyloctyl group, a phenylnonyl group, a naphthylmethyl group, a naphthylethyl group, an anthracenylmethyl group, and a phenyl-cyclopentylmethyl group.

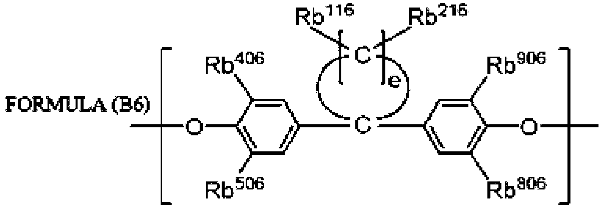

In Formula (B6), Rb¹¹⁶ and Rb²¹⁶ are each independently a hydrogen atom, a linear alkyl group having 1 or more and 3 or less carbon atoms, an alkoxy group having 1 or more and 4 or less carbon atoms, or a halogen atom, e is an integer of 4 or greater and 6 or less, and Rb⁴⁰⁶, Rb⁵⁰⁶, Rb⁸⁰⁶, and Rb⁹⁰⁶ are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 1 or more and 3 or less carbon atoms, as Rb¹¹⁶ and Rb²¹⁶, is, for example, preferably 1 or 2 and more preferably 1. Specific examples of such a group include a methyl group, an ethyl group, and an n-propyl group.

An alkyl group of the alkoxy group having 1 or more and 4 or less carbon atoms, as Rb¹¹⁶ and Rb²¹⁶, may be linear, branched, or cyclic. The number of carbon atoms in the alkyl group of the alkoxy group having 1 or more and 4 or less carbon atoms is, for example, preferably 1 or more and 3 or less, more preferably 1 or 2, and still more preferably 1. Specific examples of such a group include a methoxy group, an ethoxy group, an n-propoxy group, an n-butoxy group, an isopropoxy group, an isobutoxy group, an sec-butoxy group, a tert-butoxy group, a cyclopropoxy group, and a cyclobutoxy group.

Examples of the halogen atom as Rb¹¹⁶ and Rb²¹⁶ include a fluorine atom, a chlorine atom, a bromine atom, and an iodine atom.

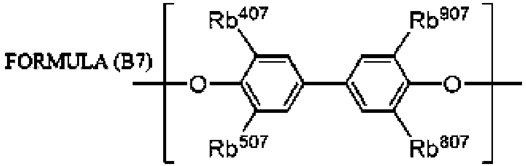

In Formula (B7), Rb⁴⁰⁷, Rb⁵⁰⁷, Rb⁸⁰⁷, and Rb⁹⁰⁷ are each independently a hydrogen atom, an alkyl group having 1 or more and 4 or less carbon atoms, an alkoxy group having 1 or more and 6 or less carbon atoms, or a halogen atom.

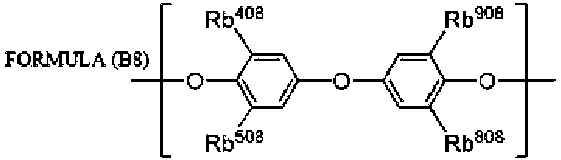

In Formula (B8), Rb⁴⁰⁸, Rb⁵⁰⁸, Rb⁸⁰⁸, and Rb⁹⁰⁸ are each independently a hydrogen atom, an alkyl group having 1 or more and 4 or less carbon atoms, an alkoxy group having 1 or more and 6 or less carbon atoms, or a halogen atom.

Specific forms and preferred forms of Rb²⁰¹ in Formula (B1), Rb²⁰² in Formula (B2), Rb²⁰⁴ in Formula (B4), and Rb²⁰⁵ in Formula (B5) are the same as each other, so that Rb²⁰¹, Rb²⁰², Rb²⁰⁴, and Rb²⁰⁵ will be collectively referred to as "Rb²⁰⁰" .

The alkyl group having 1 or more and 3 or less carbon atoms, as Rb²⁰⁰, may be linear, branched, or cyclic. The number of carbon atoms in the alkyl group is, for example, preferably 1 or 2 and more preferably 1.

Examples of the alkyl group having 1 or more and 3 or less carbon atoms include a methyl group, an ethyl group, an n-propyl group, an isopropyl group, and a cyclopropyl group.

Specific forms and preferred forms of Rb⁴⁰¹ in Formula (B1), Rb⁴⁰² in Formula (B2), Rb⁴⁰³ in Formula (B3), Rb⁴⁰⁴ in Formula (B4), Rb⁴⁰⁵ in Formula (B5), Rb⁴⁰⁶ in Formula (B6), Rb⁴⁰⁷ in Formula (B7), and Rb⁴⁰⁸ in Formula (B8) are the same as each other, so that Rb⁴⁰¹, Rb⁴⁰², Rb⁴⁰³, Rb⁴⁰⁴, Rb⁴⁰⁵, Rb⁴⁰⁶, Rb⁴⁰⁷, and Rb⁴⁰⁸ will be collectively referred to as "Rb⁴⁰⁰".

The alkyl group having 1 or more and 4 or less carbon atoms, as Rb⁴⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁴⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁴⁰⁰ include a fluorine atom, a chlorine atom, a bromine atom, and an iodine atom.

Specific forms and preferred forms of Rb⁵⁰¹ in Formula (B1), Rb⁵⁰² in Formula (B2), Rb⁵⁰³ in Formula (B3), Rb⁵⁰⁴ in Formula (B4), Rb⁵⁰⁵ in Formula (B5), Rb⁵⁰⁶ in Formula (B6), Rb⁵⁰⁷ in Formula (B7), and Rb⁵⁰⁸ in Formula (B8) are the same as each other, so that Rb⁵⁰¹, Rb⁵⁰², Rb⁵⁰³, Rb⁵⁰⁴, Rb⁵⁰⁵, Rb⁵⁰⁶, Rb⁵⁰⁷, and Rb⁵⁰⁸ will be collectively referred to as "Rb⁵⁰⁰".

The alkyl group having 1 or more and 4 or less carbon atoms, as Rb⁵⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁵⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁵⁰⁰ include a fluorine atom, a chlorine atom, a bromine atom, and an iodine atom.

Specific forms and preferred forms of Rb⁸⁰¹ in Formula (B1), Rb⁸⁰² in Formula (B2), Rb⁸⁰³ in Formula (B3), Rb⁸⁰⁴ in Formula (B4), Rb⁸⁰⁵ in Formula (B5), Rb⁸⁰⁶ in Formula (B6), Rb⁸⁰⁷ in Formula (B7), and Rb⁸⁰⁸ in Formula (B8) are the same as each other, so that Rb⁸⁰¹ Rb⁸⁰², Rb⁸⁰³, Rb⁸⁰⁴, Rb⁸⁰⁵, Rb⁸⁰⁶, Rb⁸⁰⁷, and Rb⁸⁰⁸ will be collectively referred to as "Rb⁸⁰⁰".

The alkyl group having 1 or more and 4 or less carbon atoms, as Rb⁸⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁸⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁸⁰⁰ include a fluorine atom, a chlorine atom, a bromine atom, and an iodine atom.

Specific forms and preferred forms of Rb⁹⁰¹ in Formula (B1), Rb⁹⁰² in Formula (B2), Rb⁹⁰³ in Formula (B3), Rb⁹⁰⁴ in Formula (B4), Rb⁹⁰⁵ in Formula (B5), Rb⁹⁰⁶ in Formula (B6), Rb⁹⁰⁷ in Formula (B7), and Rb⁹⁰⁸ in Formula (B8) are the same as each other, so that Rb⁹⁰¹, Rb⁹⁰², Rb⁹⁰³, Rb⁹⁰⁴, Rb⁹⁰⁵, Rb⁹⁰⁶, Rb⁹⁰⁷, and Rb⁹⁰⁸ will be collectively referred to as "Rb⁹⁰⁰".

The alkyl group having 1 or more and 4 or less carbon atoms, as Rb⁹⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁹⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁹⁰⁰ include a fluorine atom, a chlorine atom, a bromine atom, and an iodine atom.

Hereinafter, diol units (B1-1) to (B1-6) are shown as specific examples of the diol unit (B1). The diol unit (B1) is not limited thereto.

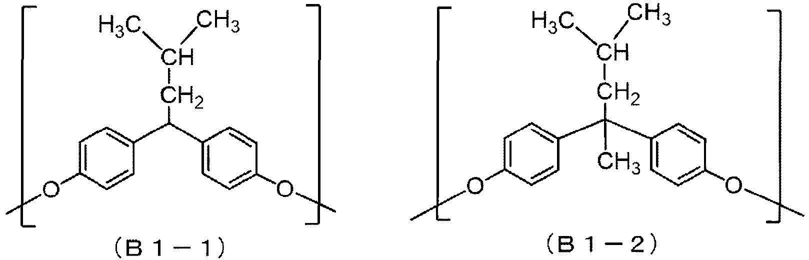

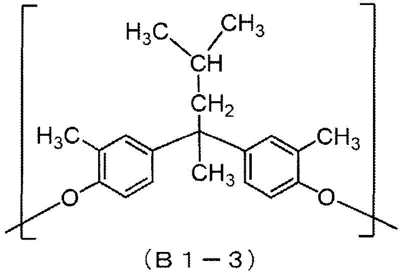

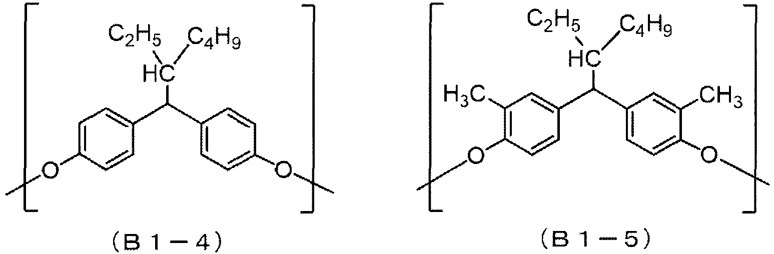

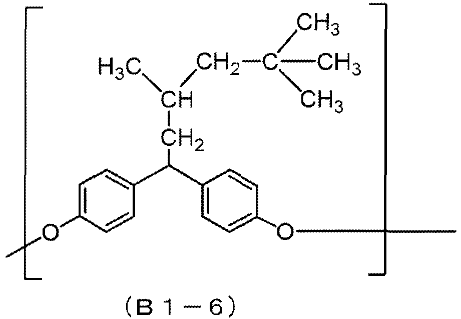

Hereinafter, diol units (B2-1) to (B2-11) are shown as specific examples of the diol unit (B2). The diol unit (B2) is not limited thereto.

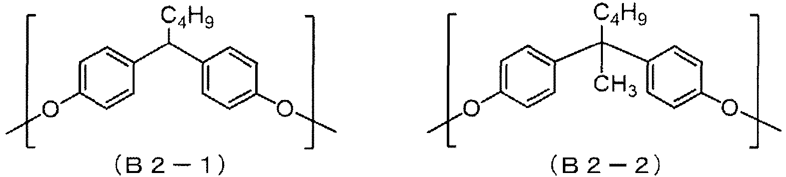

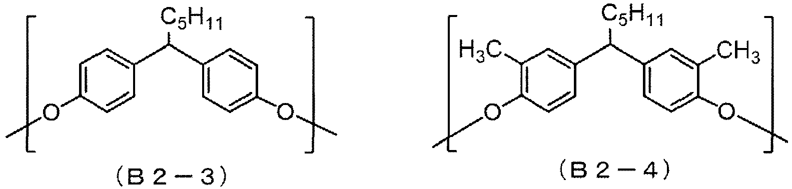

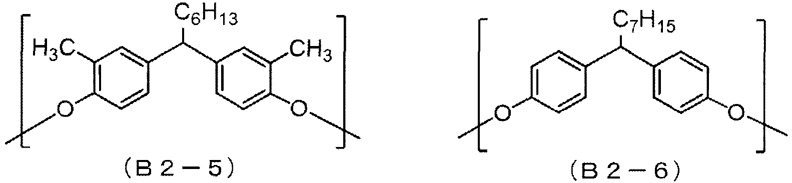

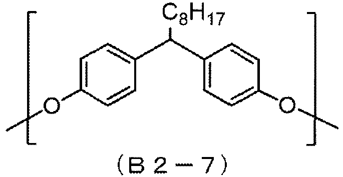

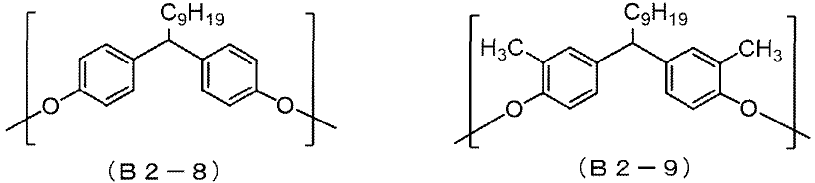

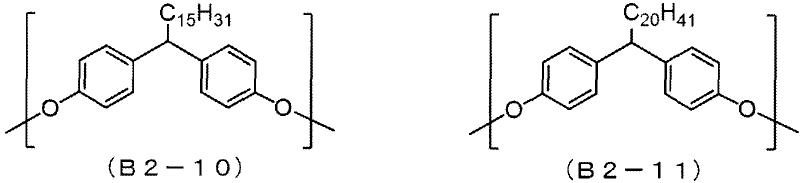

Hereinafter, diol units (B3-1) to (B3-4) are shown as specific examples of the diol unit (B3). The diol unit (B3) is not limited thereto.

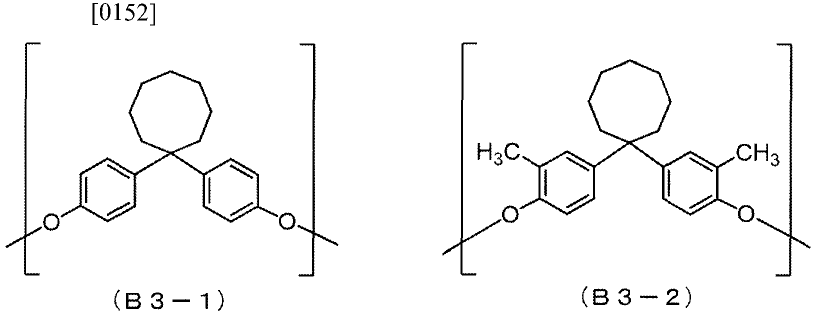

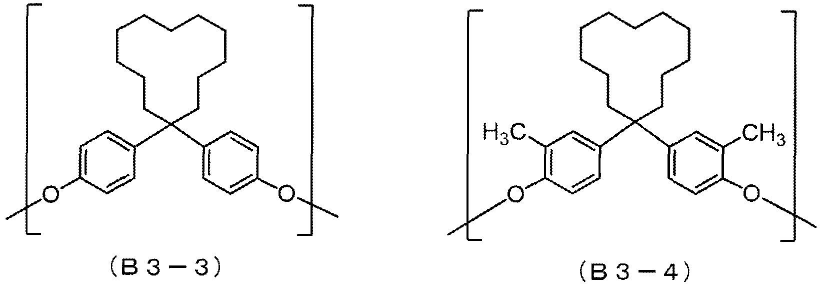

Hereinafter, diol units (B4-1) to (B4-7) are shown as specific examples of the diol unit (B4). The diol unit (B4) is not limited thereto.

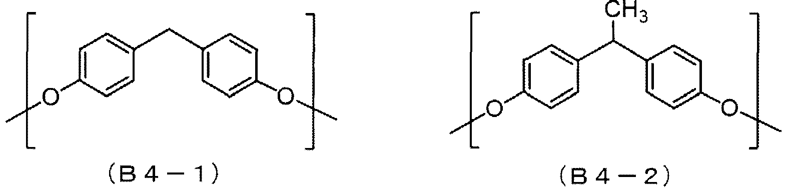

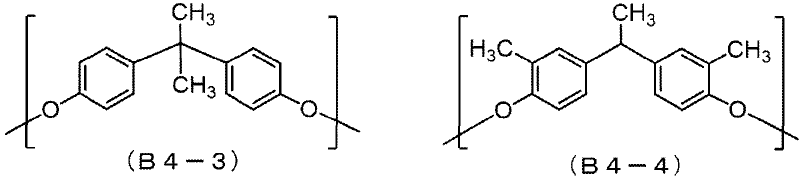

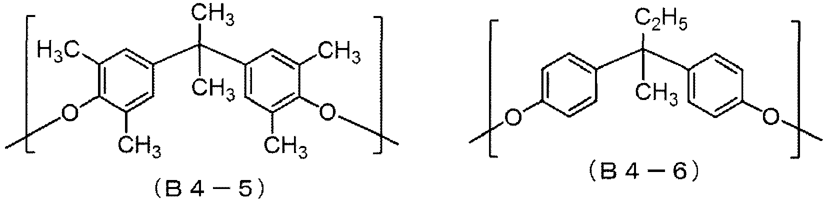

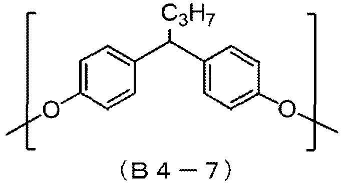

Hereinafter, diol units (B5-1) to (B5-6) are shown as specific examples of the diol unit (B5). The diol unit (B5) is not limited thereto.

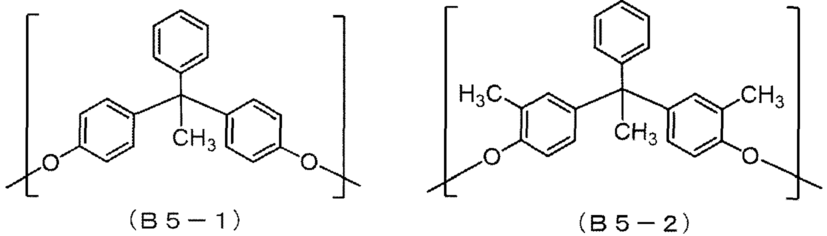

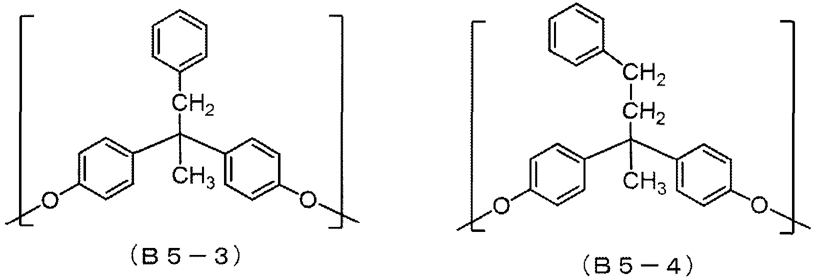

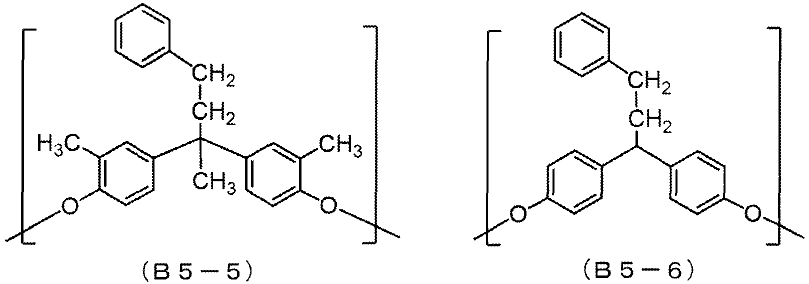

Hereinafter, diol units (B6-1) to (B6-4) are shown as specific examples of the diol unit (B6). The diol unit (B6) is not limited thereto.

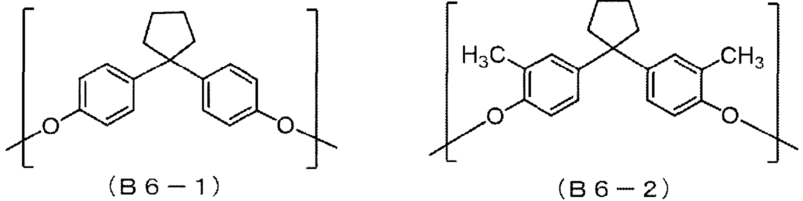

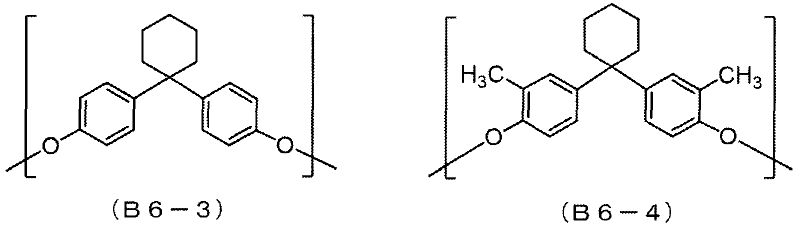

Hereinafter, diol units (B7-1) to (B7-3) are shown as specific examples of the diol unit (B7). The diol unit (B7) is not limited thereto.

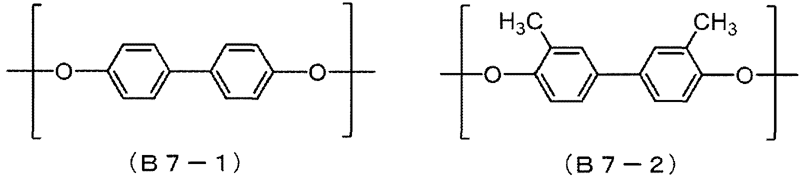

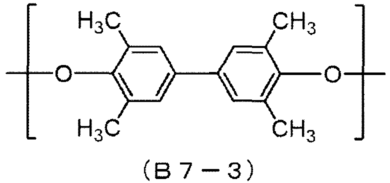

Hereinafter, diol units (B8-1) to (B8-3) are shown as specific examples of the diol unit (B8). The diol unit (B8) is not limited thereto.

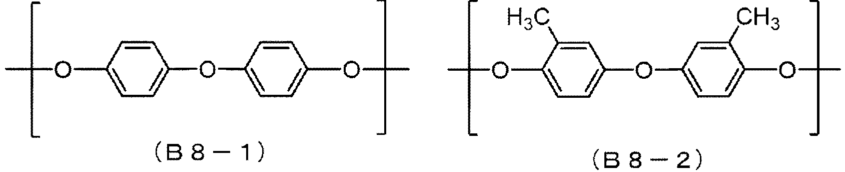

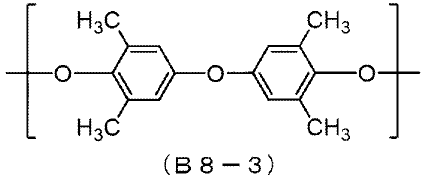

The diol unit (B) included in the polyarylate resin (PA) may be used alone or in combination of two or more kinds thereof.

A mass proportion of the diol unit (B) in the polyarylate resin (PA) is, for example, preferably 25% by mass or more and 80% by mass or less.

In a case where the mass proportion of the diol unit (B) is 25% by mass or greater, peeling of the outermost surface layer can be further suppressed. From the viewpoint, the mass proportion of the diol unit (B) is, for example, more preferably 30% by mass or greater and still more preferably 35% by mass or greater.

In a case where the mass proportion of the diol unit (B) is 80% by mass or less, the solubility in a coating solution for forming the outermost surface layer is maintained, and thus the abrasion resistance can be improved. From the viewpoint, the mass proportion of the diol unit (B) is, for example, more preferably 75% by mass or less and still more preferably 70% by mass or less.

The polyarylate resin (PA) may have other diol units in addition to the diol unit (B). Examples of other diol units include aliphatic diol (such as ethylene glycol, diethylene glycol, triethylene glycol, propylene glycol, butanediol, hexanediol, and neopentyl glycol) units, and alicyclic diol (such as cyclohexanediol, cyclohexanedimethanol, and hydrogenated bisphenol A) units. The diol units included in the polyarylate resin (PA) may be used alone or in combination of two or more kinds thereof.

A terminal of the polyarylate resin (PA) may be sealed or modified with a terminal-sealing agent, a molecular weight modifier, or the like used in a case of the production. Examples of the terminal-sealing agent or the molecular weight modifier include monohydric phenol, monovalent acid chloride, monohydric alcohol, and monovalent carboxylic acid.

Examples of the monohydric phenol include phenol, o-cresol, m-cresol, p-cresol, o-ethylphenol, m-ethylphenol, p-ethylphenol, o-propylphenol, m-propylphenol, p-propylphenol, o-tert-butylphenol, m-tert-butylphenol, p-tert-butylphenol, pentylphenol, hexylphenol, octylphenol, nonylphenol, a 2,6-dimethylphenol derivative, a 2-methylphenol derivative, o-phenylphenol, m-phenylphenol, p-phenylphenol, o-methoxyphenol, m-methoxyphenol, p-methoxyphenol, 2,3,5-trimethylphenol, 2,3,6-trimethylphenol, 2,3-xylenol, 2,4-xylenol, 2,5-xylenol, 2,6-xylenol, 3,4-xylenol, 3,5-xylenol, 2-phenyl-2-(4-hydroxyphenyl)propane, 2-phenyl-2-(2-hydroxyphenyl)propane, and 2-phenyl-2-(3-hydroxyphenyl)propane.

Examples of the monovalent acid chloride include monofunctional acid halides such as benzoyl chloride, methanesulfonyl chloride, phenylchloroformate, acetic acid chloride, butyric acid chloride, octyl acid chloride, benzenesulfonyl chloride, benzenesulfinyl chloride, sulfinyl chloride, benzene phosphonyl chloride, and substituents thereof.

Examples of the monohydric alcohol include methanol, ethanol, n-propanol, isopropanol, n-butanol, 2-butanol, pentanol, hexanol, dodecyl alcohol, stearyl alcohol, benzyl alcohol, and phenethyl alcohol.

Examples of the monovalent carboxylic acid include acetic acid, propionic acid, octanoic acid, cyclohexanecarboxylic acid, benzoic acid, toluic acid, phenylacetic acid, p-tert-butylbenzoic acid, and p-methoxyphenylacetic acid.

The weight-average molecular weight of the polyarylate resin (PA) is, for example, preferably 30,000 or greater and 300,000 or less, more preferably 40,000 or greater and 250,000 or less, and still more preferably 50,000 or greater and 200,000 or less.

The molecular weight of the polyarylate resin (PA) is a molecular weight in terms of polystyrene measured by gel permeation chromatography (GPC). The GPC is carried out by using tetrahydrofuran as an eluent.

The polyarylate resin (PA) can be obtained by polycondensing a monomer providing the dicarboxylic acid unit (A), a monomer providing the diol unit (B), and other monomers as necessary using a method in the related art. Examples of the method of polycondensing monomers include an interfacial polymerization method, a solution polymerization method, and a melt polymerization method. The interfacial polymerization method is a polymerization method of mixing a divalent carboxylic acid halide dissolved in an organic solvent that is incompatible with water and dihydric alcohol dissolved in an alkali aqueous solution to obtain polyester. Examples of documents related to the interfacial polymerization method include W. M. EARECKSON, J. Poly. Sci., XL399, 1959, and JP1965-1959B (JP-S40-1959B). Since the interfacial polymerization method enables the reaction to proceed faster than the reaction carried out by the solution polymerization method and also enables suppression of hydrolysis of the divalent carboxylic acid halide, as a result, a high-molecular-weight polyarylate resin (PA) can be obtained.

Hereinafter, each layer of the photoreceptor will be described in detail.

### [Conductive Substrate]

Examples of the conductive substrate include metal plates, metal drums, metal belts, or the like, containing a metal (such as aluminum, copper, zinc, chromium, nickel, molybdenum, vanadium, indium, gold, and platinum) or an alloy (such as stainless steel). In addition, examples of the conductive substrate also include paper, a resin film, a belt, or the like, that is obtained by being coated, vapor-deposited, or laminated with a conductive compound (such as a conductive polymer and indium oxide), a metal (such as aluminum, palladium, and gold) or an alloy. Here, the term "conductive" denotes that a volume resistivity is less than 1 × 10¹³ Ω·cm.

In a case where the electrophotographic photoreceptor is used in a laser printer, for example, it is preferable that the surface of the conductive substrate is roughened such that a centerline average roughness Ra thereof is 0.04 µm or greater and 0.5 µm or less for the purpose of suppressing interference fringes from occurring in a case of irradiation with laser beams. In a case where incoherent light is used as a light source, roughening of the surface to prevent interference fringes is not particularly necessary, and it is suitable for longer life because occurrence of defects due to the roughness of the surface of the conductive substrate is suppressed.

Examples of the roughening method include wet honing performed by suspending an abrasive in water and spraying the suspension to the conductive substrate, centerless grinding performed by pressure-welding the conductive substrate against a rotating grindstone and continuously grinding the conductive substrate, and an anodizing treatment.

Examples of the roughening method also include a method of dispersing conductive or semi-conductive powder in a resin without roughening the surface of the conductive substrate to form a layer on the surface of the conductive substrate, and performing roughening using the particles dispersed in the layer.

The roughening treatment performed by anodization is a treatment of forming an oxide film on the surface of the conductive substrate by carrying out anodization in an electrolytic solution using a conductive substrate made of a metal (for example, aluminum) as an anode. Examples of the electrolytic solution include a sulfuric acid solution and an oxalic acid solution. However, a porous anodized film formed by the anodization is chemically active in a natural state, is easily contaminated, and has a large resistance fluctuation depending on the environment. Therefore, for example, it is preferable that a sealing treatment is performed on the porous anodized film so that the fine pores of the oxide film are closed by volume expansion due to a hydration reaction in pressurized steam or boiling water (a metal salt such as nickel may be added thereto) for a change into a more stable hydrous oxide.

The film thickness of the anodized film is, for example, preferably 0.3 µm or greater and 15 µm or less. In a case where the film thickness is in the above-described range, the barrier properties against injection tend to be exhibited, and an increase in the residual potential due to repeated use tends to be suppressed.

The conductive substrate may be subjected to a treatment with an acidic treatment liquid or a boehmite treatment.

The treatment with an acidic treatment liquid is carried out, for example, as follows. First, an acidic treatment liquid containing phosphoric acid, chromic acid, and hydrofluoric acid is prepared. As a blending proportion of the phosphoric acid, chromic acid, and hydrofluoric acid to the acidic treatment liquid, for example, a concentration of the phosphoric acid may be in a range of 10% by mass or more and 11% by mass or less, a concentration of the chromic acid may be in a range of 3% by mass or more and 5% by mass or less, and a concentration of the hydrofluoric acid may be in a range of 0.5% by mass or more and 2% by mass or less, and a concentration of all of these acids may be in a range of 13.5% by mass or more and 18% by mass or less. A treatment temperature is, for example, preferably 42°C or higher and 48°C or lower. The film thickness of the coating film is, for example, preferably 0.3 µm or greater and 15 µm or less.

The boehmite treatment is carried out, for example, by dipping the conductive substrate in pure water at 90°C or higher and 100°C or lower for 5 minutes to 60 minutes or by bringing the conductive substrate into contact with heated steam at 90°C or higher and 120°C or lower for 5 minutes to 60 minutes. A film thickness of the coating film is, for example, preferably 0.1 µm or more and 5 µm or less. This coating film may be further subjected to the anodizing treatment using an electrolytic solution having low film solubility, such as adipic acid, boric acid, a borate, a phosphate, a phthalate, a maleate, a benzoate, a tartrate, or a citrate.

### [Undercoat Layer]

The undercoat layer is, for example, a layer containing inorganic particles and a binder resin.

Examples of the inorganic particles include inorganic particles having a powder resistance (volume resistivity) of 1 × 10² Ω·cm or more and 1 × 10¹¹ Ω·cm or less.

Among these, as the inorganic particles having the above-described resistance value, for example, metal oxide particles such as tin oxide particles, titanium oxide particles, zinc oxide particles, and zirconium oxide particles may be used, and zinc oxide particles are particularly preferable.

A specific surface area of the inorganic particles, measured by a BET method, may be, for example, 10 m²/g or more.

The volume average particle diameter of the inorganic particles may be, for example, 50 nm or greater and 2,000 nm or less (for example, preferably 60 nm or greater and 1,000 nm or less).

The content of the inorganic particles is, for example, preferably 10% by mass or greater and 80% by mass or less and more preferably 40% by mass or greater and 80% by mass or less with respect to the amount of the binder resin.

The inorganic particles may be subjected to a surface treatment. As the inorganic particles, inorganic particles subjected to different surface treatments or inorganic particles having different particle diameters may be used in the form of a mixture of two or more kinds thereof.

Examples of the surface treatment agent include a silane coupling agent, a titanate-based coupling agent, an aluminum-based coupling agent, and a surfactant. In particular, for example, a silane coupling agent is preferable, and a silane coupling agent containing an amino group is more preferable.

Examples of the silane coupling agent containing an amino group include 3-aminopropyltriethoxysilane, N-2-(aminoethyl)-3-aminopropyltrimethoxysilane, N-2-(aminoethyl)-3-aminopropylmethyldimethoxysilane, and N,N-bis(2-hydroxyethyl)-3-aminopropyltriethoxysilane, but are not limited thereto.

The silane coupling agent may be used in the form of a mixture of two or more kinds thereof. For example, the silane coupling agent having an amino group and other silane coupling agents may be used in combination. Examples of other silane coupling agents include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl) -3-aminopropyltriethoxysilane, and 3-chloropropyltrimethoxysilane, but are not limited thereto.

The surface treatment method using a surface treatment agent may be any method as long as the method is a known method, and any of a dry method or a wet method may be used.

The treatment amount of the surface treatment agent is, for example, preferably 0.5% by mass or greater and 10% by mass or less with respect to the amount of the inorganic particles.

Here, for example, the undercoat layer may contain an electron-accepting compound (acceptor compound) together with the inorganic particles from the viewpoint of enhancing long-term stability of electrical properties and carrier blocking properties.

Examples of the electron-accepting compound include electron-transporting substances, for example, a compound having an anthraquinone structure; a quinone-based compound such as chloranil and bromanil; a tetracyanoquinodimethane-based compound; a fluorenone compound such as 2,4,7-trinitrofluorenone and 2,4,5,7-tetranitro-9-fluorenone; an oxadiazole-based compound such as 2-(4-biphenyl)-5-(4-t-butylphenyl)-1,3,4-oxadiazole, 2,5-bis(4-naphthyl)-1,3,4-oxadiazole, and 2,5-bis(4-diethylaminophenyl)-1,3,4-oxadiazole; a xanthone-based compound; a thiophene compound; a diphenoquinone compound such as 3,3',5,5'-tetra-t-butyldiphenoquinone; and a benzophenone compound such as 4-hydroxybenzophenone or 2,3,4-trihydroxybenzophenone.

In particular, as the electron-accepting compound, for example, a compound having an anthraquinone structure is preferable. As the compound having an anthraquinone structure, for example, a hydroxyanthraquinone compound, an aminoanthraquinone compound, or an aminohydroxyanthraquinone compound is preferable; and specifically, anthraquinone, alizarin, quinizarin, anthrarufin, purpurin, 4-ethoxy-1,2-hydroxy-9,10-anthraquinone, or a derivative thereof is preferable.

The electron-accepting compound may be contained in the undercoat layer in a state of being dispersed with inorganic particles or in a state of being attached to the surface of each inorganic particle.

Examples of the method of attaching the electron-accepting compound to the surface of the inorganic particle include a dry method and a wet method.

The dry method is, for example, a method of attaching the electron-accepting compound to the surface of the inorganic particles by adding the electron-accepting compound dropwise to the inorganic particles directly or by dissolving the electron-accepting compound in an organic solvent while stirring the inorganic particles with a mixer having a large shearing force and spraying the mixture together with dry air or nitrogen gas. For example, the dropwise addition or spraying of the electron-accepting compound may be performed at a temperature equal to or lower than a boiling point of the solvent. After the dropwise addition or spraying of the electron-accepting compound, the mixture may be further baked at 100°C or higher. The baking is not particularly limited as long as the temperature and the time are adjusted such that the electrophotographic characteristics can be obtained.

The wet method is, for example, a method of attaching the electron-accepting compound to the surface of the inorganic particles by adding the electron-accepting compound to inorganic particles while dispersing the inorganic particles in a solvent by performing using a stirrer, an ultrasonic disperser, a sand mill, an attritor, or a ball mill, stirring or dispersing the mixture, and removing the solvent. The solvent removing method is carried out by, for example, filtration or distillation, so that the solvent is distilled off. After removal of the solvent, the mixture may be further baked at 100°C or higher. The baking is not particularly limited as long as the temperature and the time are adjusted such that electrophotographic characteristics can be obtained. In the wet method, the moisture contained in the inorganic particles may be removed before the electron-accepting compound is added, and examples thereof include a method of removing the moisture while stirring and heating the moisture in a solvent and a method of removing the moisture by azeotropically boiling the moisture with a solvent.

The electron-accepting compound may be attached to the surface before or after the inorganic particles are subjected to a surface treatment with a surface treatment agent or simultaneously with the surface treatment performed on the inorganic particles with a surface treatment agent.

The content of the electron-accepting compound may be, for example, 0.01% by mass or greater and 20% by mass or less and is preferably 0.01% by mass or greater and 10% by mass or less with respect to the amount of the inorganic particles.

Examples of the binder resin used for the undercoat layer include known polymer compounds such as an acetal resin (such as polyvinyl butyral), a polyvinyl alcohol resin, a polyvinyl acetal resin, a casein resin, a polyamide resin, a cellulose resin, gelatin, a polyester resin, an unsaturated polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a urea resin, a phenol resin, a phenol-formaldehyde resin, a melamine resin, a urethane resin, an alkyd resin, and an epoxy resin, a zirconium chelate compound, a titanium chelate compound, an aluminum chelate compound, a titanium alkoxide compound, an organic titanium compound, and known materials such as a silane coupling agent.

Examples of the binder resin used for the undercoat layer include a charge-transporting resin containing a charge-transporting group, and a conductive resin (such as polyaniline).

Among these, as the binder resin used for the undercoat layer, for example, a resin insoluble in a coating solvent of the upper layer is preferable, and a resin obtained by reaction between a curing agent and at least one resin selected from the group consisting of a thermosetting resin such as a urea resin, a phenol resin, a phenol-formaldehyde resin, a melamine resin, a urethane resin, an unsaturated polyester resin, an alkyd resin, or an epoxy resin; a polyamide resin, a polyester resin, a polyether resin, a methacrylic resin, an acrylic resin, a polyvinyl alcohol resin, and a polyvinyl acetal resin is particularly preferable.

In a case where these binder resins are used in combination of two or more kinds thereof, the mixing ratio thereof is set as necessary.

The undercoat layer may contain various additives for improving the electrical properties, the environmental stability, and the image quality.

Examples of the additive include known materials such as an electron-transporting pigment such as a polycyclic condensed pigment or an azo-based pigment, a zirconium chelate compound, a titanium chelate compound, an aluminum chelate compound, a titanium alkoxide compound, an organic titanium compound, and a silane coupling agent. The silane coupling agent is used for a surface treatment of the inorganic particles as described above, but may be further added to the undercoat layer as an additive.

Examples of the silane coupling agent serving as an additive include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl)-3-aminopropyltriethoxysilane, and 3-chloropropyltrimethoxysilane.

Examples of the zirconium chelate compound include zirconium butoxide, ethyl zirconium acetoacetate, zirconium triethanolamine, acetylacetonate zirconium butoxide, ethyl zirconium butoxide acetoacetate, zirconium acetate, zirconium oxalate, zirconium lactate, zirconium phosphonate, zirconium octanoate, zirconium naphthenate, zirconium laurate, zirconium stearate, zirconium isostearate, zirconium butoxide methacrylate, stearate zirconium butoxide, and isostearate zirconium butoxide.

Examples of the titanium chelate compound include tetraisopropyl titanate, tetranormal butyl titanate, a butyl titanate dimer, tetra(2-ethylhexyl) titanate, titanium acetylacetonate, polytitanium acetylacetonate, titanium octylene glycolate, titanium lactate ammonium salt, titanium lactate, titanium lactate ethyl ester, titanium triethanol aminate, and polyhydroxy titanium stearate.

Examples of the aluminum chelate compound include aluminum isopropylate, monobutoxyaluminum diisopropylate, aluminum butyrate, diethylacetoacetate aluminum diisopropylate, and aluminum tris(ethylacetoacetate).

These additives may be used alone or in the form of a mixture or a polycondensate of a plurality of compounds.

The undercoat layer may have, for example, a Vickers hardness of 35 or greater.

For example, the surface roughness (ten-point average roughness) of the undercoat layer may be adjusted to 1/2 from 1/(4n) (n is a refractive index of an upper layer) of a laser wavelength λ for exposure to be used to suppress moire fringes.

Resin particles or the like may be added to the undercoat layer to adjust the surface roughness. Examples of the resin particles include silicone resin particles and crosslinked polymethyl methacrylate resin particles. In addition, the surface of the undercoat layer may be polished to adjust the surface roughness. Examples of the polishing method include buff polishing, a sandblast treatment, wet honing, and a grinding treatment.

The formation of the undercoat layer is not particularly limited, and a known forming method is used. For example, a coating film of a coating solution for forming an undercoat layer in which the above-described components are added to a solvent is formed, and the coating film is dried and, as necessary, heated.

Examples of the solvent for preparing the coating solution for forming an undercoat layer include known organic solvents such as an alcohol-based solvent, an aromatic hydrocarbon solvent, a halogenated hydrocarbon solvent, a ketone-based solvent, a ketone alcohol-based solvent, an ether-based solvent, and an ester-based solvent.

Specific examples of the solvent include typical organic solvents such as methanol, ethanol, n-propanol, iso-propanol, n-butanol, benzyl alcohol, methyl cellosolve, ethyl cellosolve, acetone, methyl ethyl ketone, cyclohexanone, methyl acetate, ethyl acetate, n-butyl acetate, dioxane, tetrahydrofuran, methylene chloride, chloroform, chlorobenzene, and toluene.

Examples of the method of dispersing the inorganic particles in a case of preparing the coating solution for forming an undercoat layer include known methods such as a roll mill, a ball mill, a vibration ball mill, an attritor, a sand mill, a colloid mill, and a paint shaker.

Examples of the method of coating the conductive substrate with the coating solution for forming an undercoat layer include typical coating methods such as a blade coating method, a wire bar coating method, a spray coating method, a dip coating method, a bead coating method, an air knife coating method, and a curtain coating method.

The layer thickness of the undercoat layer is set to be, for example, preferably 15 µm or greater and more preferably in a range of 20 µm or greater and 50 µm or less.

### [Interlayer]

The interlayer is, for example, a layer containing a resin. Examples of the resin used for the interlayer include polymer compounds such as an acetal resin (for example, polyvinyl butyral or the like), a polyvinyl alcohol resin, a polyvinyl acetal resin, a casein resin, a polyamide resin, a cellulose resin, gelatin, a polyurethane resin, a polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a phenol-formaldehyde resin, and a melamine resin.

The interlayer may be a layer containing an organometallic compound. Examples of the organometallic compound used for the interlayer include organometallic compounds containing a metal atom such as zirconium, titanium, aluminum, manganese, and silicon.

The compounds used for the interlayer may be used alone or in the form of a mixture or a polycondensate of a plurality of compounds.

Among these, it is preferable that the interlayer is, for example, a layer containing an organometallic compound containing a zirconium atom or a silicon atom.

The formation of the interlayer is not particularly limited, and a known forming method is used. For example, a coating film of a coating solution for forming an interlayer in which the above-described components are added to a solvent is formed, and the coating film is dried and, as necessary, heated.

Examples of the coating method of forming the interlayer include typical methods such as a dip coating method, a push-up coating method, a wire bar coating method, a spray coating method, a blade coating method, an air knife coating method, and a curtain coating method.

The layer thickness of the interlayer is set to be, for example, preferably in a range of 0.1 µm or greater and 3 µm or less. The interlayer may be used as the undercoat layer.

### [Charge Generation Layer]

A charge generation layer is, for example, a layer containing a charge generation material and a binder resin. In addition, the charge generation layer may be a deposition layer of the charge generation material. For example, the deposition layer of the charge generation material is preferable in a case where an incoherent light source such as a light emitting diode (LED) and an organic electro-luminescence (EL) image array is used.

Examples of the charge generation material include an azo pigment such as bisazo or trisazo; a fused ring aromatic pigment such as dibromoanthanthrone; a perylene pigment; a pyrrolopyrrole pigment; a phthalocyanine pigment; zinc oxide; and trigonal selenium.

Among these, for example, a metal phthalocyanine pigment or a metal-free phthalocyanine pigment is preferably used as the charge generation material in order to deal with laser exposure in a near infrared region. Specifically, for example, hydroxygallium phthalocyanine, chlorogallium phthalocyanine, dichloro-tin phthalocyanine, and titanyl phthalocyanine are more preferable.

On the other hand, for example, a fused ring aromatic pigment such as dibromoanthanthrone, a thioindigo-based pigment, a porphyrazine compound, zinc oxide, trigonal selenium, or a bisazo pigment is preferable as the charge generation material in order to deal with laser exposure in a near ultraviolet region.

The above-described charge generation material may be used even in a case where an incoherent light source such as an LED having a central wavelength of light emission in a range of 450 nm or more and 780 nm or less and an organic EL image array is used.

In a case where an n-type semiconductor such as a fused ring aromatic pigment, a perylene pigment, and an azo pigment is used as the charge generation material, a dark current is unlikely to be generated, and image defects referred to as black spots can be suppressed even in a case in which a thin film is used. The n-type is determined by the polarity of the flowing photocurrent using a typically used time-of-flight method, and a material in which electrons more easily flow as carriers than positive holes is determined as the n-type.

The binder resin used for the charge generation layer is selected from a wide range of insulating resins, and the binder resin may be selected from organic photoconductive polymers such as poly-N-vinylcarbazole, polyvinylanthracene, polyvinylpyrene, and polysilane.

Examples of the binder resin include a polyvinyl butyral resin, a polyarylate resin (polycondensate of bisphenols and aromatic divalent carboxylic acid, or the like), a polycarbonate resin, a polyester resin, a phenoxy resin, a vinyl chloride-vinyl acetate copolymer, a polyamide resin, an acrylic resin, a polyacrylamide resin, a polyvinylpyridine resin, a cellulose resin, a urethane resin, an epoxy resin, casein, a polyvinyl alcohol resin, and a polyvinylpyrrolidone resin. Here, the term "insulating" means that a volume resistivity is 1 × 10¹³ Ω·cm or more. These binder resins are used alone or in the form of a mixture of two or more kinds thereof.

The blending ratio between the charge generation material and the binder resin is, for example, preferably in a range of 10:1 to 1:10 in terms of the mass ratio.

The charge generation layer may also contain other known additives.

The formation of the charge generation layer is not particularly limited, and a known forming method is used. For example, a coating film of a coating solution for forming a charge generation layer in which the above-described components are added to a solvent is formed, and the coating film is dried and, as necessary, heated. The charge generation layer may be formed by a vapor deposition of the charge generation material. For example, the formation of the charge generation layer by the vapor deposition is particularly preferable in a case where the fused ring aromatic pigment or the perylene pigment is used as the charge generation material.

Examples of the solvent for preparing the coating solution for forming the charge generation layer include methanol, ethanol, n-propanol, n-butanol, benzyl alcohol, methyl cellosolve, ethyl cellosolve, acetone, methyl ethyl ketone, cyclohexanone, methyl acetate, n-butyl acetate, dioxane, tetrahydrofuran, methylene chloride, chloroform, chlorobenzene, and toluene. These solvents are used alone or in the form of a mixture of two or more kinds thereof.

As a method of dispersing particles (for example, the charge generation material) in the coating solution for forming the charge generation layer, for example, a media disperser such as a ball mill, a vibration ball mill, an attritor, a sand mill, and a horizontal sand mill, or a medialess disperser such as a stirrer, an ultrasonic disperser, a roll mill, and a high-pressure homogenizer is used. Examples of the high-pressure homogenizer include a collision type homogenizer in which a dispersion liquid is dispersed by a liquid-liquid collision or a liquid-wall collision in a high-pressure state, and a penetration type homogenizer in which a dispersion liquid is dispersed by penetrating the liquid through a fine flow path in a high-pressure state. During the dispersion, it is effective to set the average particle diameter of the charge generation material in the coating solution for forming a charge generation layer to 0.5 µm or less, for example, preferably 0.3 µm or less, and more preferably 0.15 µm or less.

Examples of the method of coating the undercoat layer (or the interlayer) with the coating solution for forming a charge generation layer include typical methods such as a blade coating method, a wire bar coating method, a spray coating method, a dip coating method, a bead coating method, an air knife coating method, and a curtain coating method.

The layer thickness of the charge generation layer is set to be, for example, preferably in a range of 0.1 µm or greater and 5.0 µm or less and more preferably in a range of 0.2 µm or greater and 2.0 µm or less.

### [Charge Transport Layer]

The charge transport layer is, for example, a layer containing a binder resin and a charge transport material. The charge transport layer may be a layer containing a polymer charge transport material.

Examples of the charge transport material include a quinone-based compound such as p-benzoquinone, chloranil, bromanil, or anthraquinone; a tetracyanoquinodimethane-based compound; a fluorenone compound such as 2,4,7-trinitrofluorenone; a xanthone compound; a benzophenone-based compound; a cyanovinyl-based compound; and an electron-transporting compound such as an ethylene-based compound. Examples of the charge transport material also include a positive hole-transporting compound such as a triarylamine-based compound, a benzidine-based compound, an arylalkane-based compound, an aryl-substituted ethylene-based compound, a stilbene-based compound, an anthracene-based compound, and a hydrazone-based compound. These charge transport materials are used alone or in combination of two or more kinds thereof, but are not limited thereto.

Examples of the polymer charge transport material include known chemical substances having charge transport properties, such as poly-N-vinylcarbazole and polysilane. For example, a polyester-based polymer charge transport material is preferable. The polymer charge transport material may be used alone or in combination with a binder resin.

Examples of the charge transport material or the polymer charge transport material include a polycyclic aromatic compound, an aromatic nitro compound, an aromatic amine compound, a heterocyclic compound, a hydrazone compound, a styryl compound, an enamine compound, a benzidine compound, a triarylamine compound (particularly, a triphenylamine compound), a diamine compound, an oxadiazole compound, a carbazole compound, an organic polysilane compound, a pyrazoline compound, an indole compound, an oxazole compound, an isoxazole compound, a thiazole compound, a thiadiazole compound, an imidazole compound, a pyrazole compound, a triazole compound, a cyano compound, a benzofuran compound, an aniline compound, a butadiene compound, and a resin containing a group derived from these substances. Specific examples thereof include compounds described in paragraphs 0078 to 0080 of JP2021-117377A, paragraphs 0046 to 0048 of JP2019-035900A, paragraphs 0052 and 0053 of JP2019-012141A, paragraphs 0122 to 0134 of JP2021-071565A, paragraphs 0101 to 0110 of JP2021-015223A, paragraph 0116 of JP2013-097300A, paragraphs 0309 to 0316 of WO2019/070003A, paragraphs 0103 to 0107 of JP2018-159087A, and paragraphs 0102 to 0113 of JP2021-148818A.

From the viewpoint of the charge mobility, for example, it is preferable that the charge transport material contains at least one selected from the group consisting of a chemical substance (C1) represented by Formula (C1), a chemical substance (C2) represented by Formula (C2), a chemical substance (C3) represented by Formula (C3), and a chemical substance (C4) represented by Formula (C4).

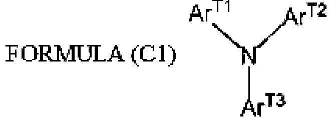

In Formula (C1), Ar^{T1}, Ar^{T2}, and Ar^{T3} are each independently an aryl group, -C₆H₄-C(R^{T4})=C(R^{T5})(R^{T6}), or -C₆H₄-CH=CH-CH=C(RT⁷)(R^{T8}). R^{T4}, R^{T5}, R^{T6}, R^{T7}, and R^{T8} are each independently a hydrogen atom, an alkyl group, or an aryl group. In a case where R^{T5} and R^{T6} are aryl groups, the aryl groups may be linked through a divalent group of -C(R⁵¹)(R⁵²)- and/or -C(R⁶¹)=C(R⁶²)-. R⁵¹, R⁵², R⁶¹, and R⁶² are each independently a hydrogen atom or an alkyl group having 1 or more and 3 or less carbon atoms.

The group in Formula (C1) may be substituted with a halogen atom, an alkyl group having 1 or more and 5 or less carbon atoms, an alkoxy group having 1 or more and 5 or less carbon atoms, or a substituted amino group substituted with an alkyl group having 1 or more and 3 or less carbon atoms.

From the viewpoint of the charge mobility, as the chemical substance (C1), for example, a chemical substance containing at least one of an aryl group or -C₆H₄-CH=CH-CH=C(R^{T7})(R^{T8}) is preferable, and a chemical substance (C'1) represented by Formula (C'1) is more preferable.

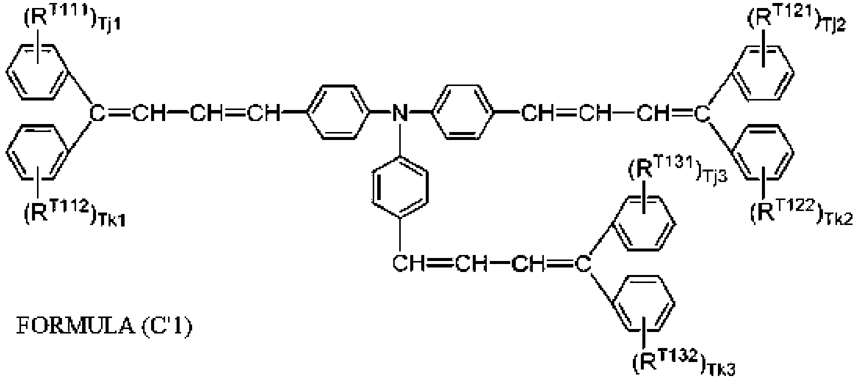

In Formula (C'1), R^{T111}, R^{T112}, R^{T121}, R^{T122}, R^{T131}, and R^{T132} are each independently a hydrogen atom, a halogen atom, an alkyl group (for example, preferably an alkyl group having 1 or more and 3 or less carbon atoms), an alkoxy group (for example, preferably an alkoxy group having 1 or more and 3 or less carbon atoms), a phenyl group, or a phenoxy group. Tj1, Tj2, Tj3, Tk1, Tk2, and Tk3 are each independently 0, 1, or 2.

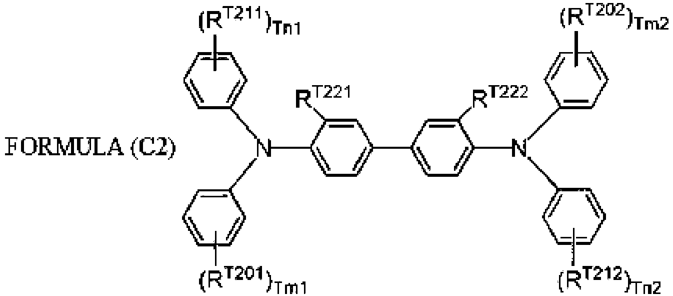

In Formula (C2), R^{T201}, R^{T202}, R^{T211}, and R^{T212} are each independently a halogen atom, an alkyl group having 1 or more and 5 or less carbon atoms, an alkoxy group having 1 or more and 5 or less carbon atoms, an amino group substituted with an alkyl group having 1 or 2 carbon atoms, an aryl group, -C(R^{T21})=C(R^{T22})(R^{T23}), or -CH=CH-CH=C(R^{T24})(R^{T25}). R^{T21}, R^{T22}, R^{T23}, R^{T24}, and R^{T25} are each independently a hydrogen atom, an alkyl group, or an aryl group. R^{T221} and R^{T222} are each independently a hydrogen atom, a halogen atom, an alkyl group having 1 or more and 5 or less carbon atoms, or an alkoxy group having 1 or more and 5 or less carbon atoms. Tm1, Tm2, Tn1, and Tn2 are each independently 0, 1, or 2.

The group in Formula (C2) may be substituted with a halogen atom, an alkyl group having 1 or more and 5 or less carbon atoms, an alkoxy group having 1 or more and 5 or less carbon atoms, or a substituted amino group substituted with an alkyl group having 1 or more and 3 or less carbon atoms.

From the viewpoint of the charge mobility, as the chemical substance (C2), for example, a chemical substance containing at least one of an alkyl group, an aryl group, or -CH=CH-CH=C(R^{T24})(R^{T25}) is preferable, and a chemical substance containing two of an alkyl group, an aryl group, or -CH=CH-CH=C(R^{T24})(R^{T25}) is more preferable.

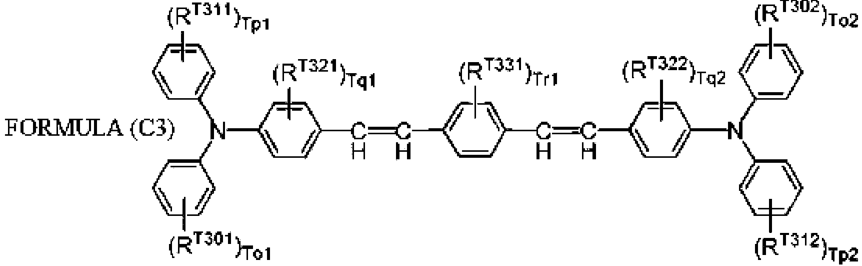

In Formula (C3), R^{T301}, R^{T302}, R^{T311}, and R^{T312} are each independently a halogen atom, an alkyl group having 1 or more and 5 or less carbon atoms, an alkoxy group having 1 or more and 5 or less carbon atoms, an amino group substituted with an alkyl group having 1 or 2 carbon atoms, an aryl group, -C(R^{T31})=C(R^{T32})(R^{T33}), or -CH=CH-CH=C(R^{T34})(R^{T35}). R^{T31}, R^{T32}, R^{T33}, R^{T34}, and R^{T35} are each independently a hydrogen atom, an alkyl group, or an aryl group. R^{T321}, R^{T322}, and R^{T331} are each independently a hydrogen atom, a halogen atom, an alkyl group having 1 or more and 5 or less carbon atoms, or an alkoxy group having 1 or more and 5 or less carbon atoms. To1, To2, Tp1, Tp2, Tq1, Tq2, and Tr1 are each independently 0, 1, or 2.

The group in Formula (C3) may be substituted with a halogen atom, an alkyl group having 1 or more and 5 or less carbon atoms, an alkoxy group having 1 or more and 5 or less carbon atoms, or a substituted amino group substituted with an alkyl group having 1 or more and 3 or less carbon atoms.

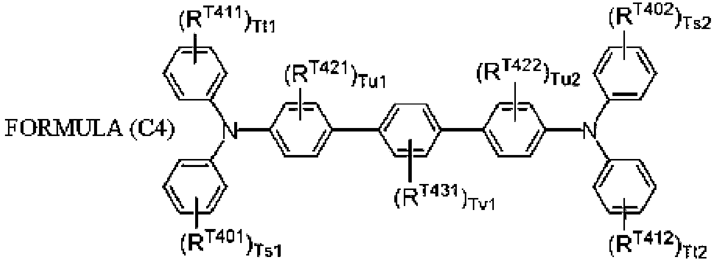

In Formula (C4), R^{T401}, R^{T402}, R^{T411}, and R^{T412} are each independently a halogen atom, an alkyl group having 1 or more and 5 or less carbon atoms, an alkoxy group having 1 or more and 5 or less carbon atoms, an amino group substituted with an alkyl group having 1 or 2 carbon atoms, an aryl group, -C(R^{T41})=C(R^{T42})(R^{T43}), or -CH=CH-CH=C(R^{T44})(R^{T45}). R^{T41}, R^{T42}, R^{T43}, R^{T44}, and R^{T45} are each independently a hydrogen atom, an alkyl group, or an aryl group. R^{T421}, R^{T422}, and R^{T431} are each independently a hydrogen atom, a halogen atom, an alkyl group having 1 or more and 5 or less carbon atoms, or an alkoxy group having 1 or more and 5 or less carbon atoms. Ts1, Ts2, Tt1, Tt2, Tu1, Tu2, and Tv1 are each independently 0, 1, or 2.

The group in Formula (C4) may be substituted with a halogen atom, an alkyl group having 1 or more and 5 or less carbon atoms, an alkoxy group having 1 or more and 5 or less carbon atoms, or a substituted amino group substituted with an alkyl group having 1 or more and 3 or less carbon atoms.

Examples of the binder resin used for the charge transport layer include a polycarbonate resin, a polyester resin, a polyarylate resin, a methacrylic resin, an acrylic resin, a polyvinyl chloride resin, a polyvinylidene chloride resin, a polystyrene resin, a polyvinyl acetate resin, a styrene-butadiene copolymer, a vinylidene chloride-acrylonitrile copolymer, a vinyl chloride-vinyl acetate copolymer, a vinyl chloride-vinyl acetate-maleic anhydride copolymer, a silicone resin, a silicone alkyd resin, a phenol-formaldehyde resin, a styrene-alkyd resin, poly-N-vinylcarbazole, and polysilane. Among the above, for example, a polycarbonate resin or a polyarylate resin is preferable as the binder resin. The binder resins are used alone or in combination of two or more kinds thereof.

A blending ratio between the charge transport material and the binder resin is, for example, preferably 10:1 to 1:5 in terms of mass ratio.

In a case where the charge transport layer is the outermost surface layer of the photoreceptor, the charge transport layer contains at least a polyarylate resin (PA) and a polycarbonate resin. As a combination of the polyarylate resin (PA) and the polycarbonate resin, for example, it is preferable that both of the polyarylate resin (PA) and the polycarbonate resin are resins having a constitutional unit including a biphenyl represented by Formula (BP).

In a case where the charge transport layer is the outermost surface layer of the photoreceptor, the charge transport layer contains a phenolic compound having 3 or fewer phenolic functional groups and a molecular weight of 300 or more. A form of the phenolic compound is as described above.

The charge transport layer may also contain other known additives.

The formation of the charge transport layer is not particularly limited, and a known formation method is used. For example, the charge transport layer is obtained by forming a coating film of a coating solution for forming a charge transport layer, which is obtained by adding the above-described components to a solvent, drying the coating film, and heating the coating film as necessary.

Examples of the solvent for preparing the coating solution for forming the charge transport layer include typical organic solvents such as aromatic hydrocarbons such as benzene, toluene, xylene, and chlorobenzene; ketones such as acetone and 2-butanone; halogenated aliphatic hydrocarbons such as methylene chloride, chloroform, and ethylene chloride; and cyclic or linear ethers such as tetrahydrofuran and ethyl ether. The solvents are used alone or in a form of a mixture of two or more kinds thereof.

Examples of the coating method of coating the charge generation layer with the coating solution for forming the charge transport layer include typical methods such as a blade coating method, a wire bar coating method, a spray coating method, a dip coating method, a bead coating method, an air knife coating method, and a curtain coating method.

The layer thickness of the charge transport layer is, for example, preferably set in a range of 5 µm or more and 50 µm or less, more preferably set in a range of 8 µm or more and 45 µm or less, and still more preferably set in a range of 10 µm or more and 40 µm or less.

### [Single-Layer Type Photosensitive Layer]

The single-layer type photosensitive layer (charge generation/charge transport layer) is, for example, a layer containing a charge generation material, a charge transport material, and as necessary, a binder resin and other known additives. These materials are the same as the materials described in the sections of the charge generation layer and the charge transport layer.

The content of the charge generation material in the single-layer type photosensitive layer may be, for example, 0.1% by mass or greater and 10% by mass or less and is preferably 0.8% by mass or greater and 5% by mass or less with respect to the total solid content. In addition, a content of the charge transport material in the single-layer type photosensitive layer may be, for example, 5% by mass or more and 50% by mass or less with respect to the total solid content.

The method of forming the single-layer type photosensitive layer is the same as the method of forming the charge generation layer or the charge transport layer.

The layer thickness of the single-layer type photosensitive layer is, for example, preferably set in a range of 5 µm or more and 50 µm or less, more preferably set within a range of 8 µm or more and 45 µm or less, and still more preferably set in a range of 10 µm or more and 40 µm or less.

In a case where the single-layer type photosensitive layer is the outermost surface layer of the photoreceptor, the single-layer type photosensitive layer contains at least a polyarylate resin (PA) and a polycarbonate resin. As a combination of the polyarylate resin (PA) and the polycarbonate resin, for example, it is preferable that both of the polyarylate resin (PA) and the polycarbonate resin are resins having a constitutional unit including a biphenyl represented by Formula (BP).

In a case where the single-layer type photosensitive layer is the outermost surface layer of the photoreceptor, the single-layer type photosensitive layer contains a phenolic compound having 3 or fewer phenolic functional groups and a molecular weight of 300 or more. A form of the phenolic compound is as described above.

### <Image Forming Apparatus and Process Cartridge>

The image forming apparatus according to the present exemplary embodiment includes the electrophotographic photoreceptor, a charging device that charges a surface of the electrophotographic photoreceptor, an electrostatic latent image forming device that forms an electrostatic latent image on the charged surface of the electrophotographic photoreceptor, a developing device that develops the electrostatic latent image formed on the surface of the electrophotographic photoreceptor with a developer containing a toner to form a toner image, and a transfer device that transfers the toner image to a surface of a recording medium. Further, the electrophotographic photoreceptor according to the present exemplary embodiment is employed as the electrophotographic photoreceptor.

An example of an exemplary embodiment of the image forming apparatus according to the present exemplary embodiment includes a cleaning device that has a cleaning blade coming into contact with a surface of the electrophotographic photoreceptor and that cleans the surface of the electrophotographic photoreceptor. The cleaning device cleans the surface of the photoreceptor after the transfer of the toner image and before charging by the cleaning blade.

As the image forming apparatus according to the present exemplary embodiment, known image forming apparatuses such as an apparatus including a fixing device that fixes a toner image transferred to the surface of a recording medium; a direct transfer type apparatus that transfers a toner image formed on the surface of an electrophotographic photoreceptor directly to a recording medium; an intermediate transfer type apparatus that primarily transfers a toner image formed on the surface of an electrophotographic photoreceptor to the surface of an intermediate transfer member and secondarily transfers the toner image transferred to the surface of the intermediate transfer member to the surface of a recording medium; an apparatus including a charge erasing device that erases the charges on the surface of the electrophotographic photoreceptor by applying the charge erasing light after the transfer of the toner image and before the charging; and an apparatus including an electrophotographic photoreceptor heating member for increasing the temperature of an electrophotographic photoreceptor and decreasing the relative temperature are employed.

In a case of the intermediate transfer-type apparatus, for example, the transfer device has a configuration including an intermediate transfer member with a surface on which the toner image will be transferred, a primary transfer device that performs primary transfer to transfer the toner image formed on the surface of the electrophotographic photoreceptor to the surface of the intermediate transfer member, and a secondary transfer device that performs secondary transfer to transfer the toner image transferred to the surface of the intermediate transfer member to the surface of a recording medium.

The image forming apparatus according to the present exemplary embodiment may be any of a dry development type image forming apparatus or a wet development type (development type using a liquid developer) image forming apparatus.

In the image forming apparatus according to the present exemplary embodiment, for example, the portion including the electrophotographic photoreceptor may have a cartridge structure (process cartridge) that is attachable to and detachable from the image forming apparatus. As the process cartridge, for example, a process cartridge including the electrophotographic photoreceptor according to the present exemplary embodiment is preferably used. The process cartridge may include, for example, at least one selected from the group consisting of a charging device, an electrostatic latent image forming device, a developing device, and a transfer device in addition to the electrophotographic photoreceptor.

Hereinafter, an example of the image forming apparatus according to the present exemplary embodiment will be described, but the present exemplary embodiment is not limited thereto. Further, main parts shown in the figures will be described, but description of other parts will not be provided.

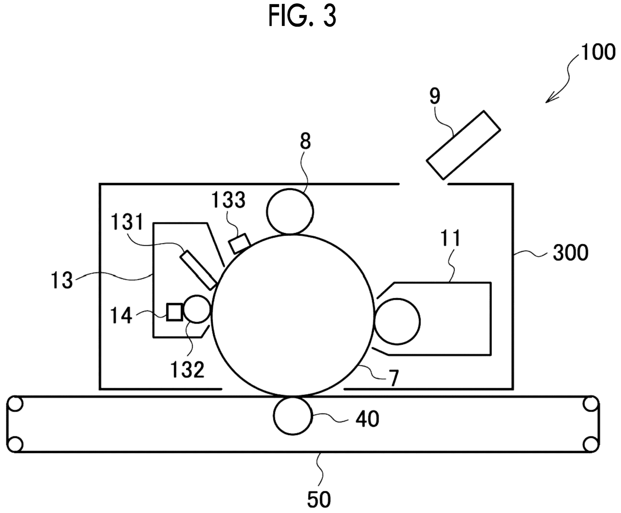

FIG. 3 is a schematic configuration view showing an example of an image forming apparatus according to the present exemplary embodiment.

As shown in FIG. 3, an image forming apparatus 100 according to the present exemplary embodiment includes a process cartridge 300 including an electrophotographic photoreceptor 7, an exposure device 9 (an example of the electrostatic latent image forming device), a transfer device 40 (primary transfer device), and an intermediate transfer member 50. In the image forming apparatus 100, the exposure device 9 is disposed at a position that can be exposed to the electrophotographic photoreceptor 7 from an opening portion of the process cartridge 300, the transfer device 40 is disposed at a position that faces the electrophotographic photoreceptor 7 via the intermediate transfer member 50, and the intermediate transfer member 50 is disposed such that a part of the intermediate transfer member 50 is in contact with the electrophotographic photoreceptor 7. Although not shown, the image forming apparatus also includes a secondary transfer device that transfers the toner image transferred to the intermediate transfer member 50 to a recording medium (for example, paper). The intermediate transfer member 50, the transfer device 40 (primary transfer device), and the secondary transfer device (not shown) correspond to an example of the transfer device.

The process cartridge 300 in FIG. 3 integrally supports the electrophotographic photoreceptor 7, a charging device 8 (an example of the charging device), a developing device 11 (an example of the developing device), and a cleaning device 13 (an example of the cleaning device) in a housing. The cleaning device 13 has a cleaning blade (an example of the cleaning member) 131, and a cleaning blade 131 is disposed to come into contact with the surface of the electrophotographic photoreceptor 7. The cleaning member may be a conductive or insulating fibrous member instead of the aspect of the cleaning blade 131, and may be used alone or in combination with the cleaning blade 131.

FIG. 3 shows an example of an image forming apparatus including a fibrous member 132 (roll shape) that supplies a lubricant 14 to the surface of the electrophotographic photoreceptor 7 and a fibrous member 133 (flat brush shape) that assists cleaning, but these are disposed as necessary.

Hereinafter, each configuration of the image forming apparatus according to the present exemplary embodiment will be described.

### -Charging Device-

The charging device 8 may be a contact type charging device in which the charging member is in contact with the outer peripheral surface of the photoreceptor, or may be a non-contact type charging device in which the charging member is not in contact with the outer peripheral surface of the photoreceptor. An effect (the contamination of the charging member is unlikely to occur for a long period of time) obtained by the image forming apparatus according to the present exemplary embodiment is remarkable in the contact type charging device.

As the charging device 8, for example, a contact-type charging member formed of a conductive or semi-conductive charging roller, a charging brush, a charging film, a charging rubber blade, a charging tube, or the like is used. Further, known chargers such as a non-contact type roller charger, a scorotron charger using corona discharge, and a corotron charger are also used.

### -Exposure Device-

Examples of the exposure device 9 include an optical system device that exposes the surface of the electrophotographic photoreceptor 7 to light such as a semiconductor laser beam, LED light, and liquid crystal shutter light in a predetermined image pattern. A wavelength of the light source is within the spectral sensitivity region of the electrophotographic photoreceptor. As a wavelength of a semiconductor laser, near infrared laser, which has an oscillation wavelength in the vicinity of 780 nm, is mostly used. However, the wavelength is not limited thereto, and a laser having an oscillation wavelength of an approximately 600 nm level or a laser having an oscillation wavelength of 400 nm or more and 450 nm or less as a blue laser may also be used. Further, a surface emission type laser light source capable of outputting a multi-beam is also effective for forming a color image.

### -Developing Device-

Examples of the developing device 11 include a typical developing device that performs development in contact or non-contact with the developer. The developing device 11 is not particularly limited as long as the device has the above-described functions, and is selected depending on the purpose thereof. Examples thereof include known developing machines having a function of attaching a one-component developer or a two-component developer to the electrophotographic photoreceptor 7 using a brush, a roller, or the like. Among these, for example, a developing device formed of a developing roller having a surface on which a developer is held is preferably used.

The developer used in the developing device 11 may be a one-component developer containing only a toner or a two-component developer containing a toner and a carrier. Further, the developer may be magnetic or non-magnetic. Known developers are employed as these developers.

### -Cleaning Device-

As the cleaning device 13, a cleaning blade type device including the cleaning blade 131 is used. Details of the cleaning blade will be described later.

### -Transfer Device-

Examples of the transfer device 40 include transfer chargers known per se such as a contact-type transfer charger formed of a belt, a roller, a film, and a rubber blade, a scorotron transfer charger using corona discharge, and a corotron transfer charger.

### -Intermediate Transfer Member-

As the intermediate transfer member 50, a semi-conductive belt-like intermediate transfer member (intermediate transfer belt) containing polyimide, polyamide-imide, polycarbonate, polyarylate, polyester, rubber, or the like is used. Further, as the form of the intermediate transfer member, a drum-like intermediate transfer member may be used in addition to the belt-like intermediate transfer member.

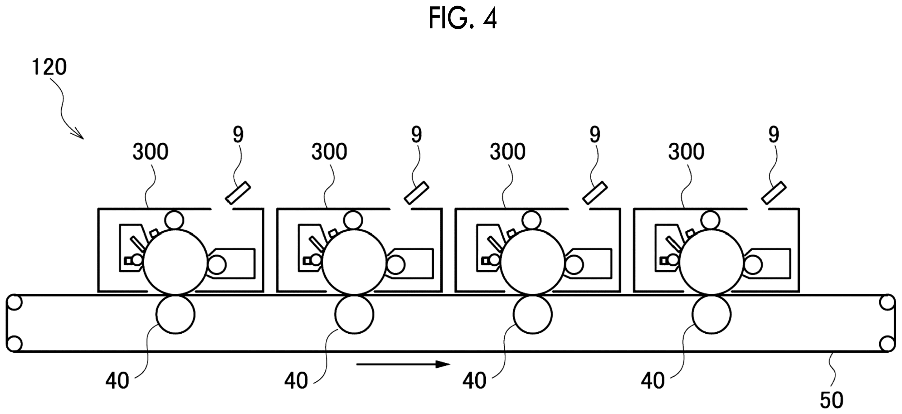

FIG. 4 is a schematic configuration view showing an example of an image forming apparatus according to the present exemplary embodiment.

An image forming apparatus 120 shown in FIG. 4 is a tandem type multicolor image forming apparatus in which four process cartridges 300 are mounted. The image forming apparatus 120 is configured such that four process cartridges 300 are arranged in parallel on the intermediate transfer member 50, and one electrophotographic photoreceptor is used for each color. The image forming apparatus 120 has the same configuration as the image forming apparatus 100 except that the image forming apparatus 120 is of a tandem type.

### [Cleaning Blade]

A cleaning blade provided in a cleaning device of the image forming apparatus according to the present exemplary embodiment is preferably, for example, in the following form.

The cleaning blade contains at least a polyurethane rubber that is obtained by polymerizing at least a polyol component and a polyisocyanate component, in at least a contact portion coming into contact with the photoreceptor (hereinafter, referred to as "contact portion") or a member constituting the contact portion (hereinafter, referred to as "contact member").

In the cleaning blade, the ratio M100/Re of the 100% modulus M100 (MPa) to the rebound resilience Re (%) is 0.25 or more, the rebound resilience Re is less than 25%, and the tensile stress at a 200% strain is 15 MPa or more, in at least the contact portion or the contact member.

In the cleaning blade satisfying the above-described characteristics, by increasing the ratio M100/Re while reducing the rebound resilience and increasing the tensile stress, pressure fluctuation (that is, the maximum pressure) of the blade is reduced, energy absorbing ability of the blade is improved, and the behavior of the blade is stabilized.

In the present disclosure, the 100% modulus, the rebound resilience, and the tensile stress of the cleaning blade are values measured by the following measuring methods using the contact member as a sample.

The 100% modulus is obtained from a stress at a 100% strain, that is measured using a dumbbell-shaped No. 3 test piece in accordance with JIS K 6251:2010 at a temperature of 23°C and a tensile speed of 500 mm/min. Strograph AE Elastomer (manufactured by Toyo Seiki-Seisaku-sho, Ltd.) is used as a measuring device.

The rebound resilience is measured using a Lupke rebound resilience tester in an environment of a temperature of 23°C in accordance with JIS K6255:1996.

The tensile stress is a tensile stress at a 200% strain measured at a temperature of 23°C. The measurement is performed at a tensile speed of 500 mm/min using a dumbbell-shaped No. 3 test piece. Strograph AE Elastomer (manufactured by Toyo Seiki-Seisaku-sho, Ltd.) is used as a measuring device.

The ratio M100/Re of the contact portion or the contact member is 0.25 or more, and is, for example, preferably 0.28 or more and more preferably 0.3 or more. From the viewpoint of abrasion resistance, the upper limit of the ratio M 100/Re of the contact portion or the contact member is, for example, preferably 1.0 or less and more preferably 0.9 or less. The ratio M100/Re of the contact portion or the contact member is, for example, preferably 0.25 or more and 1.0 or less, more preferably 0.28 or more and 1.0 or less, and still more preferably 0.3 or more and 0.9 or less.

The rebound resilience Re of the contact portion or the contact member is less than 25%, and is, for example, preferably 22% or less and more preferably 20% or less. From the viewpoint of suppressing the blade chattering and abrasion resistance, the lower limit of the rebound resilience Re of the contact portion or the contact member is, for example, preferably 10% or more and more preferably 13% or more. The rebound resilience Re of the contact portion or the contact member is, for example, preferably 10% or more and less than 25%, more preferably 10% or more and 22% or less, and still more preferably 13% or more and 20% or less.

From the viewpoint of satisfying the above-described characteristics, the 100% modulus M100 of the contact portion or the contact member is, for example, preferably 4 MPa or more and 10 MPa or less and more preferably 5 MPa or more and 9 MPa or less.

The tensile stress of the contact portion or the contact member at a strain of 200% is 15 MPa or more, and is, for example, preferably 21 MPa or more and more preferably 26 MPa or more. The upper limit of the tensile stress of the contact portion or the contact member is, for example, preferably 40 MPa or less and more preferably 35 MPa or less. The tensile stress of the contact portion or the contact member is, for example, preferably 15 MPa or more and 40 MPa or less, more preferably 21 MPa or more and 40 MPa or less, and still more preferably 26 MPa or more and 35 MPa or less.

For example, the polyurethane rubber preferably includes a hard segment and a soft segment. The 100% modulus, the rebound resilience, and the tensile stress of the contact portion or the contact member can be controlled by adjusting a content ratio between the hard segment and the soft segment contained in the polyurethane rubber by the type and used amount of the polymerization component of the polyurethane rubber and production conditions.

From the viewpoint of easily setting the 100% modulus, the rebound resilience, and the tensile stress in the above-described ranges, the average diameter of the aggregate of the hard segments is, for example, preferably 1 µm or more and 10 µm or less and more preferably 1 µm or more and 5 µm or less.

The average diameter of the aggregates of the hard segments is measured by the following measuring method.

An image is captured at a magnification of 20 times using a polarizing microscope (BX51-P, manufactured by Olympus Corporation), and the image is subjected to image processing to be binarized. Equivalent circle diameters of 20 cleaning blades, 5 points per cleaning blade, and 5 aggregates per point, that is, a total of 500 aggregates are measured, and the arithmetic mean of the total 500 equivalent circle diameters is calculated. The binarization of the image is carried out by adjusting threshold values of hue, chroma, and brightness using image processing software OLYMPUS Stream essentials (manufactured by Olympus Corporation) such that the color of the aggregates in the crystal part and the hard segment is black and the color of the aggregates in the amorphous part (corresponding to the soft segment) is white.

A weight-average molecular weight of the polyurethane rubber is, for example, preferably 1,000 or more and 4,000 or less, and more preferably 1,500 or more and 3,500 or less.

From the viewpoint of controlling the 100% modulus, the rebound resilience, and the tensile stress within the above-described ranges, a crosslinking density of the polyurethane rubber is, for example, preferably 0.93 × 10⁻³ mol/m³ or more and 1.45 × 10⁻³ mol/m³ or less, more preferably 1.01 × 10⁻³ mol/m³ or more and 1.26 × 10⁻³ mol/m³ or less, and still more preferably 1.07 × 10⁻³ mol/m³ or more and 1.22 × 10⁻³ mol/m³ or less.

Hereinafter, the material and formulation of the contact portion or the contact member will be described.

The molecular weight of the polyurethane rubber and the component of the polyurethane rubber is a value measured by gel permeation chromatography (GPC).

The polyurethane rubber is polyurethane rubber obtained by polymerizing at least a polyol component and a polyisocyanate component. The polyurethane rubber may be a polyurethane rubber obtained by further polymerizing a resin having a functional group that reacts with an isocyanate group, as necessary.

### · Polyol Component

The polyol component includes a high-molecular-weight polyol and a low-molecular-weight polyol.

The high-molecular-weight polyol is a polyol having a number-average molecular weight of 500 or more. The high-molecular-weight polyol preferably has, for example, a number-average molecular weight of 5,000 or less. Examples of the high-molecular-weight polyol include known polyols such as a polyester polyol obtained by dehydration condensation of a low-molecular-weight polyol and a dibasic acid, a polycarbonate polyol obtained by a reaction between a low-molecular-weight polyol and an alkyl carbonate, a polycaprolactone polyol, and a polyether polyol. Examples of a commercially available product of the high-molecular-weight polyol include PLACCEL 205 and PLACCEL 240 of Daicel Corporation. One kind of the high-molecular-weight polyol may be used alone, or two or more kinds thereof may be used in combination.

The polymerization ratio of the high-molecular-weight polyol is, for example, preferably 30 mol% or more and 50 mol% or less and more preferably 40 mol% or more and 50 mol% or less with respect to the total polymerized components of the polyurethane rubber.

The low-molecular-weight polyol is a polyol having a number-average molecular weight of less than 500. The low-molecular-weight polyol is a material that functions as a chain extender and a crosslinking agent.

Examples of the low-molecular-weight polyol include 1,4-butanediol. A proportion of the 1,4-butanediol is, for example, preferably more than 50 mol% and 75 mol% or less, more preferably 52 mol% or more and 75 mol% or less, still more preferably 55 mol% or more and 75 mol% or less, and even more preferably 55 mol% or more and 60 mol% or less with respect to all polyol components. The proportion of the 1,4-butanediol with respect to all low-molecular-weight polyols is, for example, preferably 80 mol% or more, more preferably 90 mol% or more, and still more preferably 100 mol%. For example, it is most preferable that all the low-molecular-weight polyols are 1,4-butanediol.

In addition to 1,4-butanediol, examples of the low-molecular-weight polyol include a diol (bifunctional), a triol (trifunctional), and a tetraol (tetrafunctional), that are known as a chain extender and a crosslinking agent. These polyols other than 1,4-butanediol may be used alone or in combination of two or more kinds thereof.

The polymerization ratio of the low-molecular-weight polyol is, for example, preferably more than 50 mol% and 75 mol% or less, more preferably 52 mol% or more and 75 mol% or less, still more preferably 55 mol% or more and 75 mol% or less, and even more preferably 55 mol% or more and 60 mol% or less with respect to all polymerization components of the polyurethane rubber.

### · Polyisocyanate Component

Examples of the polyisocyanate component include 4,4'-diphenylmethane diisocyanate (MDI), 2,6-toluene diisocyanate (TDI), 1,6-hexane diisocyanate (HDI), 1,5-naphthalene diisocyanate (NDI), and 3,3'-dimethylbiphenyl-4,4'-diisocyanate (TODI). The polyisocyanate component may be used alone or in combination of two or more kinds thereof.

As the polyisocyanate component, for example, 4,4'-diphenylmethane diisocyanate (MDI), 1,5-naphthalene diisocyanate (NDI), or hexamethylene diisocyanate (HDI) is preferable.

The polymerization ratio of the polyisocyanate component is, for example, preferably 5 mol% or more and 25 mol% or less, and more preferably 10 mol% or more and 20 mol% or less with respect to all polymerization components of the polyurethane rubber. In a case where the polymerization ratio of the polyisocyanate component is set to be in the above-described range, it is easy to set the 100% modulus, the rebound resilience, and the tensile stress to be in the above-described ranges.

### · Resin Having Functional Group Reacting with Isocyanate Group (Functional Group-containing Resin)

As a functional group-containing resin, for example, a flexible resin is preferable, and an aliphatic resin having a linear structure is more preferable. Specific examples of the functional group-containing resin include an acrylic resin having two or more hydroxy groups, a polybutadiene resin having two or more hydroxy groups, and an epoxy resin having two or more epoxy groups.

Examples of a commercially available product of the acrylic resin having two or more hydroxy groups include ACTFLOW UMB-2005B, UMB-2005P, UMB-2005, and UME-2005 (manufactured by Soken Chemical & Engineering Co., Ltd.).

Examples of a commercially available product of the polybutadiene resin having two or more hydroxy groups include R-45HT (manufactured by Idemitsu Kosan Co., Ltd.).

As the epoxy resin having two or more epoxy groups, for example, an epoxy resin that is more flexible and more robust than a general epoxy resin is preferable. For example, an epoxy resin having a flexible skeleton in the main chain structure is suitable, and examples of the flexible skeleton include an alkylene skeleton, a cycloalkane skeleton, and a polyoxyalkylene skeleton; and a polyoxyalkylene skeleton is particularly suitable. In addition, for example, an epoxy resin having a low viscosity with respect to a molecular weight is suitable. Specifically, for example, it is preferable that a weight-average molecular weight is in a range of 900 ± 100 and a viscosity at a temperature of 25°C is in a range of 15000 ± 5000 mPa·s, more preferably in a range of 15000 ± 3000 mPa·s. Examples of a commercially available product of the epoxy resin having the above-described characteristics include EPICLON EXA-4850-150 (manufactured by DIC Corporation).

### · Manufacturing Method of Polyurethane Rubber

A general production method such as a prepolymer method and a one-shot method may be adopted to the production of the polyurethane rubber. The polyurethane rubber composition is formed into a sheet shape by centrifugal molding, extrusion molding, or the like to produce the polyurethane rubber. Further, the polyurethane rubber is subjected to cutting processing or the like to produce a contact member.

Examples of a catalyst used for producing the polyurethane rubber include an amine-based compound such as a tertiary amine, a quaternary ammonium salt, and an organometallic compound such as an organic tin compound. One kind of the catalyst may be used alone, or two or more kinds thereof may be used in combination.

Examples of the tertiary amine include trialkylamine such as triethylamine; tetraalkyl diamine such as N,N,N',N'-tetramethyl-1,3-butanediamine; aminoalcohol such as dimethylethanolamine; esteramine such as ethoxylated amine, ethoxylated diamine, and bis(diethylethanolamine)adipate; a cyclohexylamine derivative such as triethylenediamine (TEDA) and N,N-dimethylcyclohexylamine; a morpholine derivative such as N-methylmorpholine and N-(2-hydroxypropyl)-dimethylmorpholine; and a piperazine derivative such as N,N'-diethyl-2-methylpiperazine and N,N'-bis-(2-hydroxypropyl)-2-methylpiperazine.

Examples of the quaternary ammonium salt include 2-hydroxypropyltrimethylammonium octylate, 1,5-diazabicyclo[4.3.0]nonene-5 (DBN) octylate, 1,8-diazabicyclo[5.4.0]undecene-7 (DBU)-octylate, DBU-oleate, DBU-p-toluenesulfonate, DBU-formate, and 2-hydroxypropyltrimethylammonium formate.

Examples of the organic tin compound include a dialkyltin compound such as dibutyltin dilaurate and dibutyltin di(2-ethylhexoate), stannous 2-ethylcaproate, and stannous oleate.

From the viewpoint of hydrolytic resistance, for example, triethylenediamine (TEDA) as a tertiary ammonium salt is preferable; and from the viewpoint of workability, a quaternary ammonium salt is preferable. Among the quaternary ammonium salts, 1,5-diazabicyclo[4.3.0]nonene-5 (DBN) octylate, 1,8-diazabicyclo[5.4.0]undecene-7 (DBU)-octylate, or DBU-formate, that has high reaction activity, is used.

The addition amount of the catalyst is, for example, preferably in a range of 0.0005% by mass or more and 0.03% by mass or less and particularly preferably 0.001% by mass or more and 0.01% by mass or less of the entire polyurethane rubber constituting the contact member.

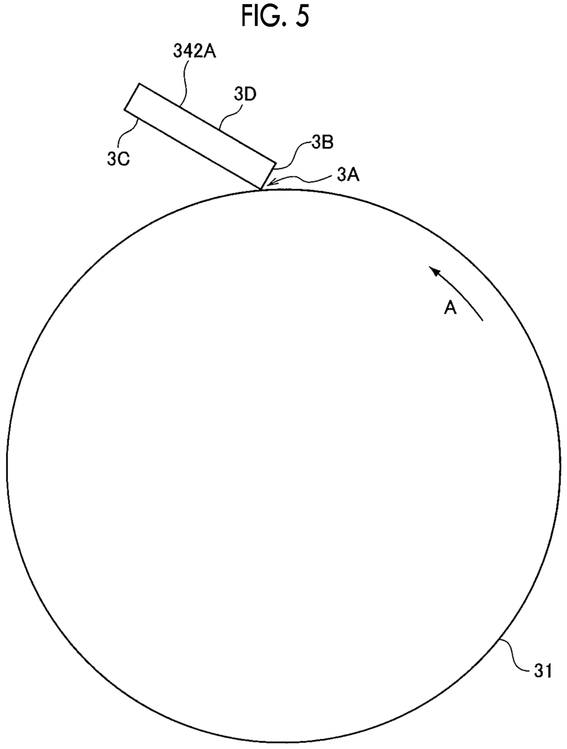

An exemplary embodiment of the cleaning blade will be described with reference to FIG. 5 to FIG. 7. FIG. 5 is a schematic diagram showing a cleaning blade according to the first exemplary embodiment, and is a diagram showing a state in which the cleaning blade is in contact with a surface of the photoreceptor.

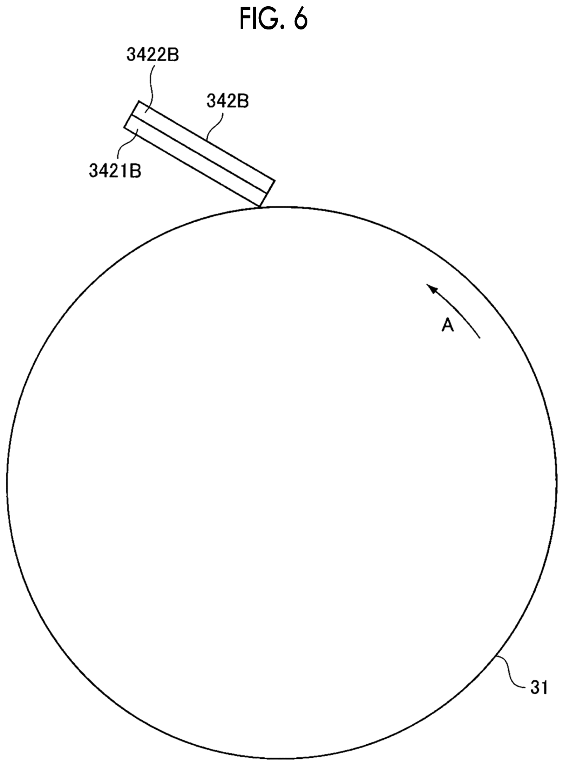

FIG. 6 is a schematic diagram showing a cleaning blade according to the second exemplary embodiment, and is a diagram showing a state in which the cleaning blade is in contact with a surface of the photoreceptor.

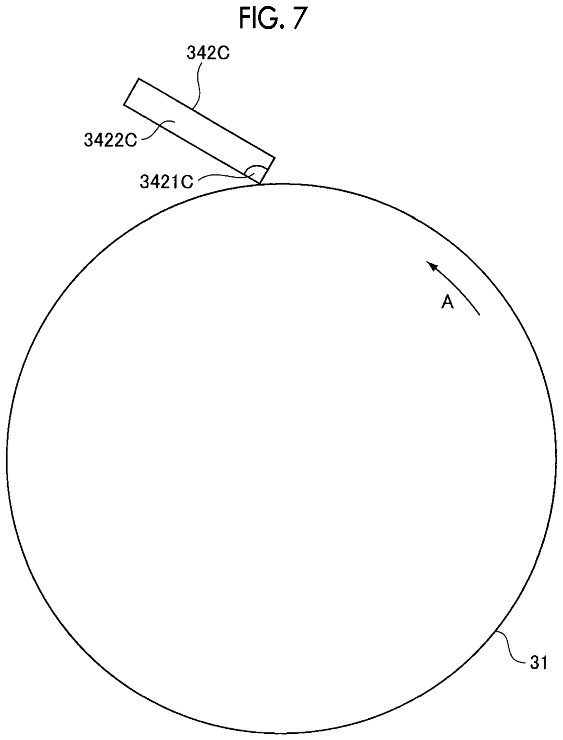

FIG. 7 is a schematic diagram showing a cleaning blade according to the third exemplary embodiment, and is a diagram showing a state in which the cleaning blade is in contact with a surface of the photoreceptor.

As shown in FIG. 5, the cleaning blade includes a contact edge portion 3A, a distal end surface 3B, a belly surface 3C, and a back surface 3D.

The contact edge portion 3A is a contact portion coming into contact with a photoreceptor 31 to be driven and cleans the surface of the photoreceptor 31.

The distal end surface 3B is a surface that constitutes one side of the contact edge portion 3A and is a surface facing an upstream side in a driving direction (arrow A direction) of the photoreceptor 31. The belly surface 3C is a surface that constitutes one side of the contact edge portion 3A and is a surface facing a downstream side in a driving direction (arrow A direction) of the photoreceptor 31. The back surface 3D is a surface that shares one side with the distal end surface 3B and is a surface facing the belly surface 3C.

The cleaning blade is supported by a support member (not shown) that is bonded to an upper portion (a side away from the photoreceptor 31) of the belly surface 3C or the back surface 3D. The cleaning blade is pressed against the photoreceptor 31 by a force from the support member. Examples of the support member include a metal member such as aluminum and stainless steel. An adhesive layer may be provided between the support member and the cleaning blade.

A cleaning blade 342A shown in FIG. 5 is in a form in which the entire cleaning blade 342A including the contact edge portion 3A is composed of a single material, that is, consists of only a contact member.

A cleaning blade 342B shown in FIG. 6 has a two-layer structure consisting of a first layer 3421B including the contact edge portion and a second layer 3422B that supports the first layer. The second layer 3422B consists of a material different from the first layer 3421B.

A cleaning blade 342C shown in FIG. 7 has a structure consisting of a contact member 3421C including the contact edge portion and a back surface member 3422C that supports the contact member 3421C. The contact member 3421C has a shape of a columnar body divided into four parts, and a right-angled portion of a quarter circle forms the contact edge portion 3A. The contact member 3421C may be a square columnar body, a rectangular columnar body, or the like. The back surface member 3422C consists of a material different from the contact member 3421C.

The cleaning blade 342A shown in FIG. 5, the first layer 3421B of the cleaning blade 342B shown in FIG. 6, and the contact member 3421C of the cleaning blade 342C shown in FIG. 7 are composed of members containing polyurethane rubber obtained by polymerizing at least a polyol component and a polyisocyanate component.

The cleaning blade 342A shown in FIG. 5, the first layer 3421B of the cleaning blade 342B shown in FIG. 6, and the contact member 3421C of the cleaning blade 342C shown in FIG. 7 have a ratio M100/Re of a 100% modulus M100 (MPa) to a rebound resilience Re (%) of 0.25 or more, the rebound resilience Re of less than 25%, and a tensile stress at a 200% strain of 15 MPa or more.

The second layer 3422B of the cleaning blade 342B shown in FIG. 6 and the back surface member 3422C of the cleaning blade 342C shown in FIG. 7 have a function of supporting the contact member. Examples of the material of these members include polyurethane rubber, silicone rubber, fluororubber, chloroprene rubber, and butadiene rubber. As the material of these members, for example, polyurethane rubber is preferable. As the polyurethane rubber, for example, ester-based polyurethane and ether-based polyurethane are shown as an example, and ester-based polyurethane is preferable.

The cleaning blade 342A shown in FIG. 5 is manufactured by performing cutting processing or the like on polyurethane rubber.

The cleaning blade 342B shown in FIG. 6 is manufactured by bonding the first layer 3421B and the second layer 3422B with an adhesive or the like, or a rubber material is poured into a mold at different times during polyurethane rubber molding to manufacture a laminate.

The cleaning blade 342C shown in FIG. 7 is manufactured, for example, by manufacturing a polyurethane rubber member having a shape in which four blades are combined with the contact member 3421C in the center and dividing the polyurethane rubber member into four parts.

### Examples

Hereinafter, exemplary embodiments of the invention will be described in detail based on examples, but the exemplary embodiments of the invention are not limited to the examples.

In the following description, "parts" and "%" are on a mass basis unless otherwise specified.

In the following description, the synthesis, the treatment, the production, and the like are carried out at room temperature (25°C ± 3°C) unless otherwise specified.

### <Synthesis of Polyarylate Resin>

Polyarylate resins (PA1) to (PA4) are synthesized.

Table 1 shows units and formulations constituting the polyarylate resins.

A2-3 and the like listed in Table 1 are specific examples of the dicarboxylic acid unit (A) described above.

B1-2 and the like listed in Table 1 are specific examples of the diol unit (B) described above.

**[Table 1]**

| Polyarylate resin | Dicarboxylic acid unit (A) | | | | Diol unit (B) | |
|---|---|---|---|---|---|---|
| Number | Number | Mol% | Number | Mol% | Number | Mol% |
| PA1 | A2-3 | 50 | - | - | B1-2 | 50 |
| PA2 | A3-2 | 50 | - | - | B4-4 | 50 |
| PA3 | A3-2 | 40 | A4-3 | 10 | B6-4 | 50 |
| PA4 | A3-2 | 50 | - | - | B1-4 | 50 |

### <Production of Photoreceptor>

The following materials are prepared as a material for forming the outermost surface layer (charge transport layer).
· Charge transport material: CTM-1
· Charge transport material: CTM-2

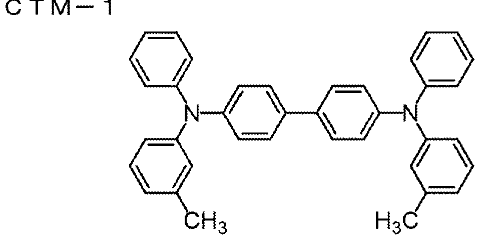

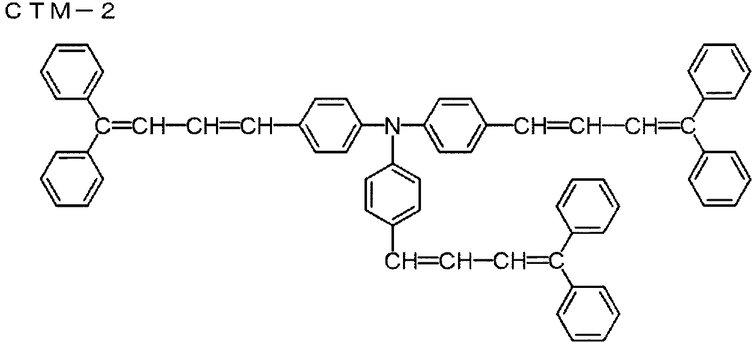

· Polycarbonate resin (PC1), viscosity average molecular weight: 50000
· Polycarbonate resin (PC3), viscosity average molecular weight: 40000

The numbers added to the constitutional units in the following structural formulae represent a molar ratio. 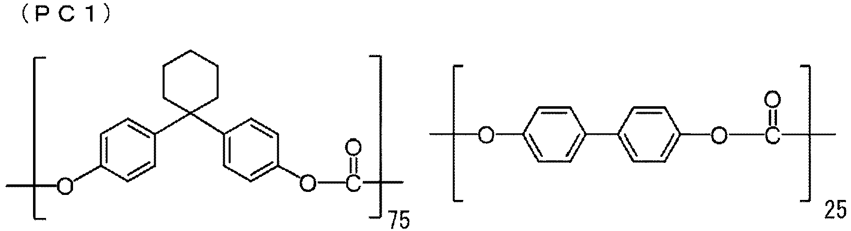 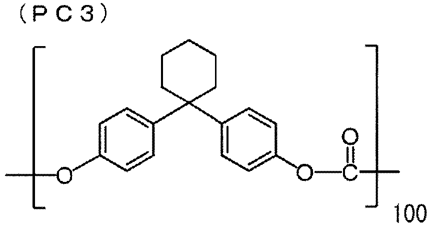
· Phenolic compound: ADEKA STAB AO-30, manufactured by ADEKA Corporation
· Phenolic compound: ADEKA STAB AO-60, manufactured by ADEKA Corporation
· Phenolic compound: ADEKA STAB AO-80, manufactured by ADEKA Corporation
· Phenolic compound: ADEKA STAB AO-330, manufactured by ADEKA Corporation

### [Example 1]

### -Formation of Undercoat Layer-

3.5 parts of a butyral resin (trade name: S-LEC BM-1, manufactured by Sekisui Chemical Co., Ltd.) and 41 parts of methyl ethyl ketone are mixed and dissolved. 10 parts of a curing agent (blocked isocyanate, trade name: SUMIDUR 3175, manufactured by Sumitomo Bayer Urethane Co., Ltd.), 45.5 parts of zinc oxide (trade name: SMZ-017N, manufactured by TAYCA Corporation) surface-treated with a silane coupling agent (trade name: KBM603, manufactured by Shin-Etsu Chemical Co., Ltd.), and 0.27 parts of the following compound represented by following structural formula are added and stirred, and then the mixture is dispersed for 2 hours with a sand mill using glass beads having a diameter of 1 mm. Further, 0.01 parts of dioctyl tin dilaurate and 2 parts of silicone resin particles (trade name: Tospearl 145, manufactured by GE Toshiba Silicones) are added thereto and stirred, thereby obtaining a coating solution for forming an undercoat layer. The outer peripheral surface of the conductive substrate is coated with the coating solution for forming an undercoat layer by dip coating, and dried and cured at 170°C for 40 minutes to form an undercoat layer with a layer thickness of 20 µm.

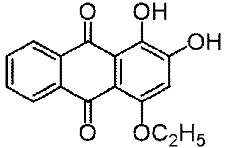

### -Formation of Charge Generation Layer-

A mixture consisting of 15 parts of hydroxygallium phthalocyanine as a charge generation material (having diffraction peaks at positions where Bragg angles (20 ± 0.2°) in the X-ray diffraction spectrum using CuKα characteristic X-rays are at least of 7.5°, 9.9°, 12.5°, 16.3°, 18.6°, 25.1°, and 28.3°), 10 parts of a vinyl chloride-vinyl acetate copolymer resin (trade name: VMCH, manufactured by Nippon Unicar Company Limited) as a binder resin, and 200 parts of n-butyl acetate is dispersed in a sand mill for 4 hours using glass beads with a diameter of 1 mm. 175 parts of n-butyl acetate and 180 parts of methyl ethyl ketone are added to the dispersion liquid, and the mixture is stirred to obtain a coating solution for forming a charge generation layer. The undercoat layer is dipped and coated with the coating solution for forming a charge generation layer, and dried at room temperature to form a charge generation layer having a layer thickness of 0.25 µm.

### -Formation of Charge Transport Layer-

· Resin: polyarylate resin (PA2) ... 20 parts (20% of total resin)
· Resin: polycarbonate resin (PC3) ... 80 parts (80% of total resin)
· Charge transport material: CTM-1 ... 67 parts
· phenolic compound: ADEKA STAB AO-30 ... 5 parts
· Solvent: tetrahydrofuran ... 570 parts
· Solvent: toluene ... 57 parts

The above-described materials are stirred and mixed to obtain a coating solution for forming a charge transport layer. The charge generation layer is dipped and coated with the coating solution for forming a charge transport layer, and dried at 143°C for 30 minutes to form a charge transport layer having a layer thickness of 33 µm.

### [Examples 2 to 19 and Comparative Examples 1 to 7]

Each photoreceptor is produced in the same manner as in Example 1, except that specifications of the charge transport layer are changed as shown in Tables 2 and 3. In a case where CTM-1 and CTM-2 are used as the charge transport material, 47 parts of CTM-1 and 20 parts of CTM-2 are used.

A proportion of the resin shown in Tables 2 and 3 is a mass proportion with respect to a total amount of the polyarylate resin and the polycarbonate resin. A content of the phenolic compound shown in Tables 2 and 3 is a mass proportion with respect to a mass of the entire charge transport layer. Each of the symbols "+" and "-" for the charge transport material means "addition" and "no addition".

### <Performance Evaluation>

The photoreceptor of each of Examples and Comparative Examples is mounted on an electrophotographic image forming apparatus (the model is shown in Tables 2 and 3, and all of which are manufactured by Xerox Corporation).

In Examples 13 to 19 and Comparative Example 7, the cleaning blade of the image forming apparatus is replaced with a cleaning blade that contains a polyurethane rubber obtained by polymerizing at least the polyol component and the polyisocyanate component at a contact portion that is in contact with the photoreceptor and that has physical properties shown in Table 4.

The following image formations (1), (2), (3), and (4) are performed in this order.
(1) 10 sheets of image charts are formed on A4 plain paper in an environment of a temperature of 20°C and a relative humidity of 40%.
(2) 100,000 sheets of image charts are formed on A4 plain paper in an environment of a temperature of 28°C and a relative humidity of 85%.
(3) 100,000 sheets of image charts are formed on A4 plain paper in an environment of a temperature of 10°C and a relative humidity of 15%.
(4) 10 sheets of image charts are formed on A4 plain paper in an environment of a temperature of 20°C and a relative humidity of 40%.

(1) 10 sheets of images are observed with the naked eye and a loupe (×25) and classified as follows.

The results are shown in "initial image quality" of Tables 2 and 3.

(4) 10 sheets of images are observed with the naked eye and a loupe (×25) and classified as follows.

The results are shown in "final image quality" of Tables 2 and 3.
A: In all 10 sheets of images, no image defects are observed in the entire region.
B+: In one or two sheets of images, slight image defects are observed only in a part of the region.
B: In three or four sheets of images, slight image defects are observed only in a part of the region.
B-: In five or six sheets of images, slight image defects are observed only in a part of the region.
C+: In one to three sheets of images, image defects are observed only in a part of the region.
C: In four to six sheets of images, image defects are observed only in a part of the region.
C-: In seven or more sheets of images, image defects are observed only in a part of the region.
D: In all 10 sheets of images, the image is clearly missing in a region of less than 1/4 of the entire region.
E: In all 10 sheets of images, the image is clearly missing in a region of 1/4 or more and less than 1/2 of the entire region.
F: In all 10 sheets of images, the image is clearly missing in a region of 1/2 or more of the entire region.
G: In all 10 sheets of images, the image is clearly missing on the entire surface.

The abbreviations in Tables 2 and 3 have the following meanings.
· PAR: polyarylate resin
· PC: polycarbonate resin

**[Table 2]**

| | Outermost surface layer (charge transport layer) | | | | | | | | | | | Model of evaluation | Performance evaluation | |
|---|---|---|---|---|---|---|---|---|---|---|---|---|---|---|
| | Resin | | | | Charge transport material | | Phenolic compound | | | | tanδ | | Initial image quality | Final image quality |
| | PAR | | PC | | CTM-1 CTM-2 | | | | | | | | | |
| | Number | Proportion | Number | Proportion | Presence or absence of use | | Type | Functional group | Molecular weight | Content with respect to total solid content | | | | |
| | | | | | +: used | | | | | | | | | |
| | | | | | -: unused | | | | | | | | | |
| | - | % by mass | - | % by mass | Symbol | Symbol | - | Number | - | % by mass | - | - | - | - |
| Comparative Example 1 | - | 0 | PC3 | 100 | + | - | - | - | - | 0 | 0.25 | AltaLink C8070 | A | F |
| Comparative Example 2 | PA2 | 100 | - | 0 | + | - | - | - | - | 0 | 0.55 | AltaLink C8070 | A | G |
| Comparative Example 3 | PA2 | 20 | PC3 | 80 | + | - | - | - | - | 0 | 0.50 | AltaLink C8070 | A | E |
| Comparative Example 4 | - | 0 | PC3 | 100 | + | - | AO-30 | 3 | 545 | 3 | 0.25 | AltaLink C8070 | A | E |
| Comparative Example 5 | PA2 | 100 | - | 0 | + | - | AO-30 | 3 | 545 | 3 | 0.60 | AltaLink C8070 | A | E |
| Comparative Example 6 | PA2 | 80 | PC3 | 20 | + | - | AO-60 | 4 | 1178 | 3 | 0.52 | AltaLink C8070 | A | E |
| Example 1 | PA2 | 20 | PC3 | 80 | + | - | AO-30 | 3 | 545 | 3 | 0.50 | AltaLink C8070 | A | D |
| Example 2 | PA3 | 80 | PC3 | 20 | + | - | AO-30 | 3 | 545 | 3 | 0.50 | AltaLink C8070 | A | D |
| Example 3 | PA4 | 20 | PC1 | 80 | + | - | AO-330 | 3 | 775 | 3 | 0.40 | AltaLink C8070 | A | C- |
| Example 4 | PA4 | 80 | PC1 | 20 | + | - | AO-330 | 3 | 775 | 3 | 0.40 | Versant 4100 Press | A | C- |
| Example 5 | PA2 | 20 | PC1 | 80 | + | - | AO-80 | 2 | 741 | 3 | 0.40 | AltaLink C8070 | A | C |
| Example 6 | PA2 | 80 | PC1 | 20 | + | - | AO-80 | 2 | 741 | 3 | 0.40 | Versant 4100 Press | A | C |
| Example 7 | PA1 | 20 | PC1 | 80 | + | - | AO-30 | 3 | 545 | 3 | 0.40 | AltaLink C8070 | A | C+ |
| Example 8 | PA1 | 80 | PC1 | 20 | + | + | AO-30 | 3 | 545 | 3 | 0.40 | Versant 4100 Press | A | C+ |
| Example 9 | PA1 | 25 | PC1 | 75 | + | - | AO-30 | 3 | 545 | 3 | 0.40 | AltaLink C8070 | A | B |
| Example 10 | PA1 | 75 | PC1 | 25 | + | + | AO-30 | 3 | 545 | 3 | 0.40 | Versant 4100 Press | A | B |
| Example 11 | PA1 | 30 | PC1 | 70 | + | - | AO-80 | 2 | 741 | 3 | 0.25 | AltaLink C8070 | A | B+ |
| Example 12 | PA1 | 60 | PC1 | 40 | + | + | AO-80 | 2 | 741 | 3 | 0.25 | AltaLink C8100 | A | B+ |

**[Table 3]**

| | Outermost surface layer (charge transport layer) | | | | | | | | | | | Model of evaluation | Performance evaluation | |
|---|---|---|---|---|---|---|---|---|---|---|---|---|---|---|
| | Resin | | | | Charge transport material | | Phenolic compound | | | | tanδ | | Initial image quality | Final image quality |
| | PAR | | PC | | CTM-1 CTM-2 | | | | | | | | | |
| | Number | Proportion | Number | Proportion | Presence or absence of use | | Type | Functional group | Molecular weight | Content with respect to total solid content | | | | |
| | | | | | +: used | | | | | | | | | |
| | | | | | -: unused | | | | | | | | | |
| | - | % by mass | - | % by mass | Symbol | Symbol | - | Number | - | % by mass | - | - | - | - |
| Comparative Example 7 | PA1 | 100 | - | 0 | + | + | AO-80 | 2 | 741 | 3 | 0.25 | AltaLink C8100 (changed to cleaning blade 1) | A | E |
| Example 13 | PA1 | 60 | PC1 | 40 | + | + | AO-80 | 2 | 741 | 3 | 0.25 | AltaLink C8100 (changed to cleaning blade 1) | A | A |
| Example 14 | PA1 | 60 | PC1 | 40 | + | + | AO-80 | 2 | 741 | 3 | 0.25 | AltaLink C8100 (changed to cleaning blade 2) | A | B+ |
| Example 15 | PA1 | 60 | PC1 | 40 | + | + | AO-80 | 2 | 741 | 3 | 0.25 | AltaLink C8100 (changed to cleaning blade 3) | A | B |
| Example 16 | PA1 | 60 | PC1 | 40 | + | + | AO-80 | 2 | 741 | 3 | 0.25 | AltaLink C8100 (changed to cleaning blade 4) | A | B+ |
| Example 17 | PA1 | 60 | PC1 | 40 | + | + | AO-80 | 2 | 741 | 3 | 0.25 | AltaLink C8100 (changed to cleaning blade 5) | A | B+ |
| Example 18 | PA1 | 60 | PC1 | 40 | + | + | AO-80 | 2 | 741 | 3 | 0.25 | Versant 4100 Press (changed to cleaning blade 1) | A | A |
| Example 19 | PA1 | 30 | PC1 | 70 | + | - | AO-80 | 2 | 741 | 3 | 0.25 | AltaLink C8070 (changed to cleaning blade 1) | A | A |

**[Table 4]**

| | M100/Re | Rebound resilience Re | Tensile stress |
|---|---|---|---|
| | - | % | MPa |
| Cleaning blade 1 | 0.37 | 20 | 24 |
| Cleaning blade 2 | 0.27 | 21 | 22 |
| Cleaning blade 3 | 0.24 | 21 | 20 |
| Cleaning blade 4 | 0.37 | 27 | 28 |
| Cleaning blade 5 | 0.40 | 21 | 14 |

The electrophotographic photoreceptor, the process cartridge, and the image forming apparatus according to the present disclosure include the following aspects. Each formula is the same as the formula having the same number described above.

### (Supplementary Notes)

(((1))) An electrophotographic photoreceptor comprising:
   a conductive substrate; and
   a photosensitive layer disposed on the conductive substrate,
   wherein an outermost surface layer contains a charge transport material, a polyarylate resin having a dicarboxylic acid unit represented by Formula (A) and a diol unit represented by Formula (B), a polycarbonate resin, and a phenolic compound having 3 or fewer phenolic functional groups and a molecular weight of 300 or more, and
   a value of a dielectric loss tangent tanδ of the outermost surface layer at a frequency of 1 Hz is 0.50 or less.
(((2))) The electrophotographic photoreceptor according to (((1))),
   wherein the value of the dielectric loss tangent tanδ of the outermost surface layer at a frequency of 1 Hz is 0.40 or less.
(((3))) The electrophotographic photoreceptor according to (((1))) or (((2))),
   wherein the phenolic compound includes a phenolic compound having 2 or fewer phenolic functional groups and a molecular weight of 350 or more.
(((4))) The electrophotographic photoreceptor according to any one of (((1))) to (((3))),
   wherein the dicarboxylic acid unit represented by Formula (A) includes at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), a dicarboxylic acid unit (A4) represented by Formula (A4), and a dicarboxylic acid unit (A5) represented by Formula (A5).
(((5))) The electrophotographic photoreceptor according to any one of (((1))) to (((4))),
   wherein the diol unit represented by Formula (B) includes at least one selected from the group consisting of a diol unit (B1) represented by Formula (B1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8).
(((6))) The electrophotographic photoreceptor according to any one of (((1))) to (((5))),
   wherein the polyarylate resin and the polycarbonate resin each have a constitutional unit including biphenyl represented by Formula (BP).
(((7))) The electrophotographic photoreceptor according to any one of (((1))) to (((6))),
   wherein a proportion of the polyarylate resin in a total amount of the polyarylate resin and the polycarbonate resin contained in the outermost surface layer is 25% by mass or more and 75% by mass or less.
(((8))) The electrophotographic photoreceptor according to any one of (((1))) to (((7))),
   wherein the photosensitive layer includes a charge generation layer and a charge transport layer, and
   the charge transport layer is the outermost surface layer.
(((9))) A process cartridge comprising:
   the electrophotographic photoreceptor according to any one of (((1))) to (((8))),
   wherein the process cartridge is attachable to and detachable from an image forming apparatus.
(((10))) An image forming apparatus comprising:
   the electrophotographic photoreceptor according to any one of (((1))) to (((8)));
   a charging device that charges a surface of the electrophotographic photoreceptor;
   an electrostatic latent image forming device that forms an electrostatic latent image on the charged surface of the electrophotographic photoreceptor;
   a developing device that develops the electrostatic latent image formed on the surface of the electrophotographic photoreceptor with a developer containing a toner to form a toner image; and
   a transfer device that transfers the toner image to a surface of a recording medium.
(((11))) The image forming apparatus according to (((10))), further comprising:
   a cleaning device that has a cleaning blade coming into contact with the surface of the electrophotographic photoreceptor and cleans the surface of the electrophotographic photoreceptor.
(((12))) The image forming apparatus according to (((11))),
   wherein a contact portion of the cleaning blade coming into contact with the electrophotographic photoreceptor contains a polyurethane rubber obtained by polymerizing at least a polyol component and a polyisocyanate component, and the contact portion is formed of a member having a ratio M100/Re of a 100% modulus M100 (MPa) to a rebound resilience Re (%) of 0.25 or more, the rebound resilience Re of less than 25%, and a tensile stress at a 200% strain of 15 MPa or more.
(((13))) The image forming apparatus according to (((12))),
   wherein the ratio M100/Re is 0.28 or more and 1.0 or less.

According to (((1))), (((4))), (((5))), (((6))), (((7))), or (((8))), an electrophotographic photoreceptor is provided in which, as compared with a case where the outermost surface layer contains a phenolic compound having 4 phenolic functional groups and does not contain a phenolic compound having 3 or fewer phenolic functional groups, or a case where a value of a dielectric loss tangent tanδ of the outermost surface layer at a frequency of 1 Hz is more than 0.50, image defects are less likely to occur until the end of the life even in a case where the electrophotographic photoreceptor is used in a high-stress condition.

According to (((2))), an electrophotographic photoreceptor is provided in which, as compared with a case where a value of a dielectric loss tangent tanδ of the outermost surface layer at a frequency of 1 Hz is more than 0.40, image defects are less likely to occur until the end of the life even in a case where the electrophotographic photoreceptor is used in a high-stress condition.

According to (((3))), an electrophotographic photoreceptor is provided in which, as compared with a case where the outermost surface layer contains a phenolic compound having three phenolic functional groups and does not contain a phenolic compound having two phenolic functional groups, image defects are less likely to occur until the end of the life even in a case where the electrophotographic photoreceptor is used in a high-stress condition.

According to (((9))), a process cartridge is provided in which, as compared with a case where the outermost surface layer of the electrophotographic photoreceptor contains a phenolic compound having 4 phenolic functional groups and does not contain a phenolic compound having 3 or fewer phenolic functional groups, or a case where a value of a dielectric loss tangent tanδ of the outermost surface layer of the electrophotographic photoreceptor at a frequency of 1 Hz is more than 0.50, image defects are less likely to occur until the end of the life even in a case where the electrophotographic photoreceptor is used in a high-stress condition.

According to (((10))) or (((11))), an image forming apparatus is provided in which, as compared with a case where the outermost surface layer of the electrophotographic photoreceptor contains a phenolic compound having 4 phenolic functional groups and does not contain a phenolic compound having 3 or fewer phenolic functional groups, or a case where a value of a dielectric loss tangent tanδ of the outermost surface layer of the electrophotographic photoreceptor at a frequency of 1 Hz is more than 0.50, image defects are less likely to occur until the end of the life even in a case where the electrophotographic photoreceptor is used in a high-stress condition.

According to (((12))), an image forming apparatus is provided in which, as compared with an image forming apparatus in which a ratio M100/Re of a cleaning blade is less than 0.25, a rebound resilience Re is 25% or more, or a tensile stress is less than 15 MPa, image defects are less likely to occur until the end of the life even in a case where the electrophotographic photoreceptor is used in a high-stress condition.

According to (((13))), an image forming apparatus is provided in which, as compared with an image forming apparatus in which a ratio M100/Re of a cleaning blade is less than 0.28 or more than 1.0, image defects are less likely to occur until the end of the life even in a case where the electrophotographic photoreceptor is used in a high-stress condition.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: conductive substrate
2: undercoat layer
3: charge generation layer
4: charge transport layer
5: photosensitive layer
10A: photoreceptor
10B: photoreceptor

7: electrophotographic photoreceptor
8: charging device
9: exposure device
11: developing device
13: cleaning device
14: lubricant
40: transfer device
50: intermediate transfer member
100: image forming apparatus
120: image forming apparatus
131: cleaning blade
132: fibrous member (roll shape)
133: fibrous member (flat brush shape)
300: process cartridge

342A, 342B, 342C: cleaning blade
3421B: first layer
3422B: second layer
3421C: contact member
3422C: back surface member
31: photoreceptor

## Claims

1. An electrophotographic photoreceptor comprising:
a conductive substrate; and
a photosensitive layer disposed on the conductive substrate,
wherein an outermost surface layer contains a charge transport material, a polyarylate resin having a dicarboxylic acid unit represented by Formula (A) and a diol unit represented by Formula (B), a polycarbonate resin, and a phenolic compound having 3 or fewer phenolic functional groups and a molecular weight of 300 or more, and
a value of a dielectric loss tangent tanδ of the outermost surface layer at a frequency of 1 Hz is 0.50 or less, 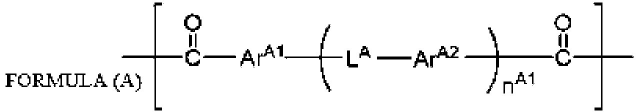 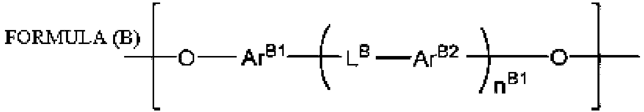
in Formula (A), Ar^{A1} and Ar^{A2} are each independently an aromatic ring which may have a substituent, L^{A} is a single bond or a divalent linking group, and n^{A1} is 0, 1, or 2,
in Formula (B), Ar^{B1} and Ar^{B2} are each independently an aromatic ring which may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

2. The electrophotographic photoreceptor according to claim 1,
wherein the value of the dielectric loss tangent tanδ of the outermost surface layer at a frequency of 1 Hz is 0.40 or less.

3. The electrophotographic photoreceptor according to claim 1 or 2,
wherein the phenolic compound includes a phenolic compound having 2 or fewer phenolic functional groups and a molecular weight of 350 or more.

4. The electrophotographic photoreceptor according to any one of claims 1 to 3,
wherein the dicarboxylic acid unit represented by Formula (A) includes at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), a dicarboxylic acid unit (A4) represented by Formula (A4), and a dicarboxylic acid unit (A5) represented by Formula (A5), 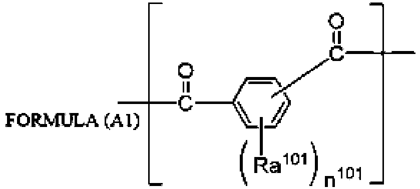 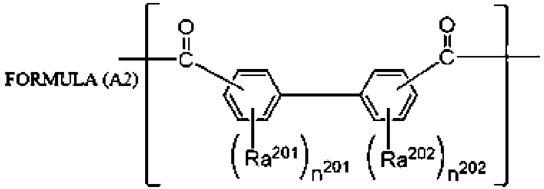 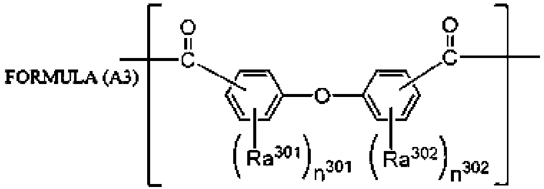 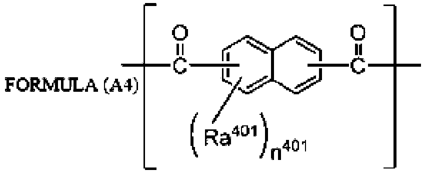 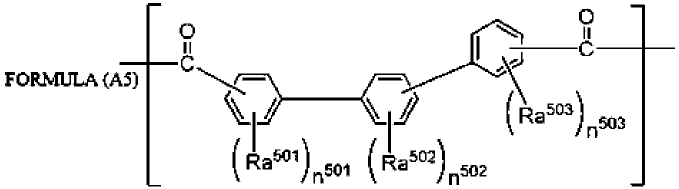
in Formula (A1), n¹⁰¹ is an integer of 0 or greater and 4 or less, and n¹⁰¹ pieces of Ra¹⁰¹'s are each independently an alkyl group having 1 or more and 10 or less carbon atoms, an aryl group having 6 or more and 12 or less carbon atoms, or an alkoxy group having 1 or more and 6 or less carbon atoms,
in Formula (A2), n²⁰¹ and n²⁰² are each independently an integer of 0 or greater and 4 or less, and n²⁰¹ pieces of Ra²⁰¹'s and n²⁰² pieces of Ra²⁰²'s are each independently an alkyl group having 1 or more and 10 or less carbon atoms, an aryl group having 6 or more and 12 or less carbon atoms, or an alkoxy group having 1 or more and 6 or less carbon atoms,
in Formula (A3), n³⁰¹ and n³⁰² are each independently an integer of 0 or greater and 4 or less, and n³⁰¹ pieces of Ra³⁰¹'s and n³⁰² pieces of Ra³⁰²'s are each independently an alkyl group having 1 or more and 10 or less carbon atoms, an aryl group having 6 or more and 12 or less carbon atoms, or an alkoxy group having 1 or more and 6 or less carbon atoms,
in Formula (A4), n⁴⁰¹ is an integer of 0 or greater and 6 or less, and n⁴⁰¹ pieces of Ra⁴⁰¹'s are each independently an alkyl group having 1 or more and 10 or less carbon atoms, an aryl group having 6 or more and 12 or less carbon atoms, or an alkoxy group having 1 or more and 6 or less carbon atoms,
in Formula (A5), n⁵⁰¹, n⁵⁰², and n⁵⁰³ are each independently an integer of 0 or greater and 4 or less, and n⁵⁰¹ pieces of Ra⁵⁰¹'s, n⁵⁰² pieces of Ra⁵⁰²'s, and n⁵⁰³ pieces of Ra⁵⁰³'s are each independently an alkyl group having 1 or more and 10 or less carbon atoms, an aryl group having 6 or more and 12 or less carbon atoms, or an alkoxy group having 1 or more and 6 or less carbon atoms.

5. The electrophotographic photoreceptor according to any one of claims 1 to 4,
wherein the diol unit represented by Formula (B) includes at least one selected from the group consisting of a diol unit (B1) represented by Formula (B1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8), 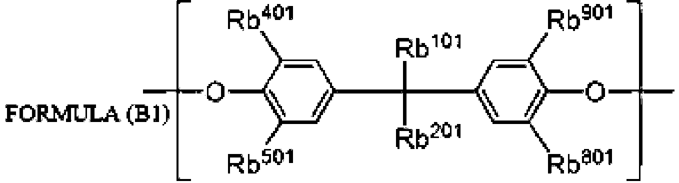 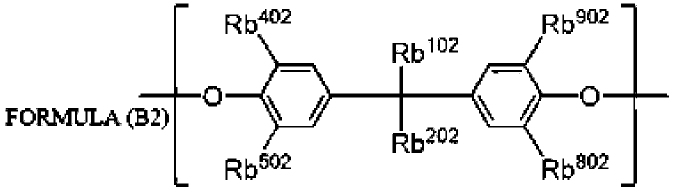 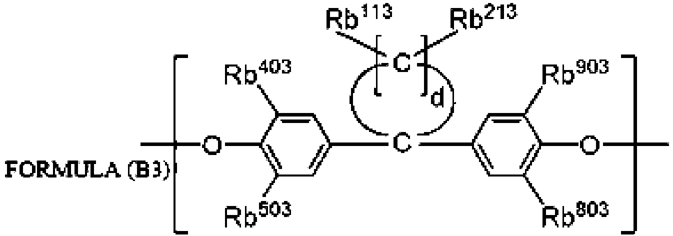 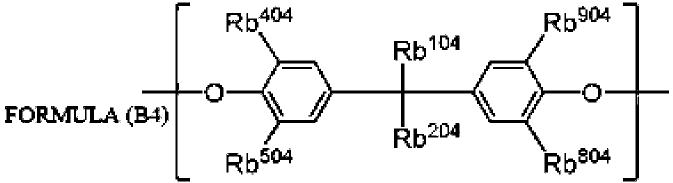 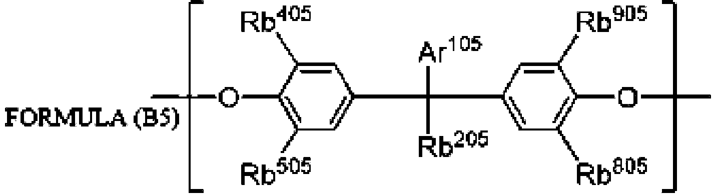 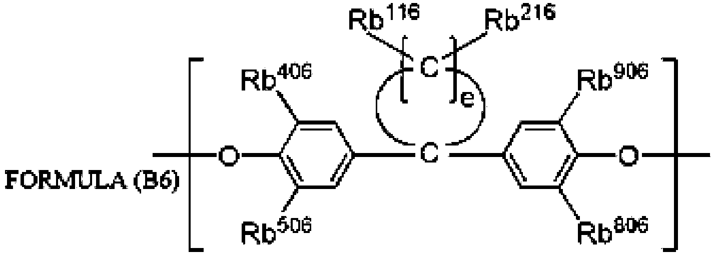 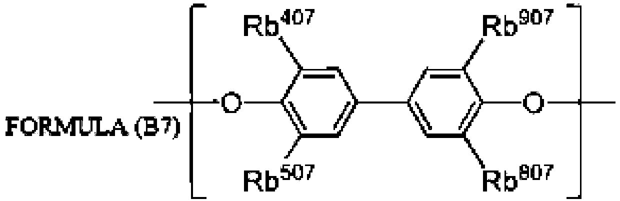 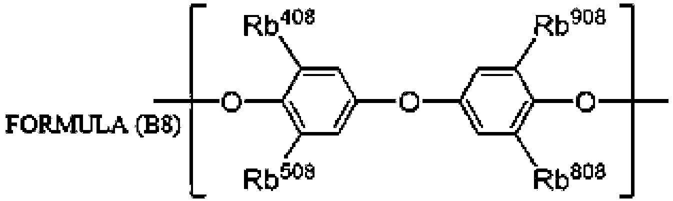
in Formula (B1), Rb¹⁰¹ is a branched alkyl group having 4 or more and 20 or less carbon atoms, Rb²⁰¹ is a hydrogen atom or an alkyl group having 1 or more and 3 or less carbon atoms, and Rb⁴⁰¹, Rb⁵⁰¹, Rb⁸⁰¹, and Rb⁹⁰¹ are each independently a hydrogen atom, an alkyl group having 1 or more and 4 or less carbon atoms, an alkoxy group having 1 or more and 6 or less carbon atoms, or a halogen atom,
in Formula (B2), Rb¹⁰² is a linear alkyl group having 4 or more and 20 or less carbon atoms, Rb²⁰² is a hydrogen atom or an alkyl group having 1 or more and 3 or less carbon atoms, and Rb⁴⁰², Rb⁵⁰², Rb⁸⁰², and Rb⁹⁰² are each independently a hydrogen atom, an alkyl group having 1 or more and 4 or less carbon atoms, an alkoxy group having 1 or more and 6 or less carbon atoms, or a halogen atom,
in Formula (B3), Rb¹¹³ and Rb²¹³ are each independently a hydrogen atom, a linear alkyl group having 1 or more and 3 or less carbon atoms, an alkoxy group having 1 or more and 4 or less carbon atoms, or a halogen atom, d is an integer of 7 or greater and 15 or less, and Rb⁴⁰³, Rb⁵⁰³, Rb⁸⁰³, and Rb⁹⁰³ are each independently a hydrogen atom, an alkyl group having 1 or more and 4 or less carbon atoms, an alkoxy group having 1 or more and 6 or less carbon atoms, or a halogen atom,
in Formula (B4), Rb¹⁰⁴ and Rb²⁰⁴ are each independently a hydrogen atom or an alkyl group having 1 or more and 3 or less carbon atoms, and Rb⁴⁰⁴, Rb⁵⁰⁴, Rb⁸⁰⁴, and Rb⁹⁰⁴ are each independently a hydrogen atom, an alkyl group having 1 or more and 4 or less carbon atoms, an alkoxy group having 1 or more and 6 or less carbon atoms, or a halogen atom,
in Formula (B5), Ar¹⁰⁵ is an aryl group having 6 or more and 12 or less carbon atoms or an aralkyl group having 7 or more and 20 or less carbon atoms, Rb²⁰⁵ is a hydrogen atom or an alkyl group having 1 or more and 3 or less carbon atoms, and Rb⁴⁰⁵, Rb⁵⁰⁵, Rb⁸⁰⁵, and Rb⁹⁰⁵ are each independently a hydrogen atom, an alkyl group having 1 or more and 4 or less carbon atoms, an alkoxy group having 1 or more and 6 or less carbon atoms, or a halogen atom,
in Formula (B6), Rb¹¹⁶ and Rb²¹⁶ are each independently a hydrogen atom, a linear alkyl group having 1 or more and 3 or less carbon atoms, an alkoxy group having 1 or more and 4 or less carbon atoms, or a halogen atom, e is an integer of 4 or greater and 6 or less, and Rb⁴⁰⁶, Rb⁵⁰⁶, Rb⁸⁰⁶, and Rb⁹⁰⁶ are each independently a hydrogen atom, an alkyl group having 1 or more and 4 or less carbon atoms, an alkoxy group having 1 or more and 6 or less carbon atoms, or a halogen atom,
in Formula (B7), Rb⁴⁰⁷, Rb⁵⁰⁷, Rb⁸⁰⁷, and Rb⁹⁰⁷ are each independently a hydrogen atom, an alkyl group having 1 or more and 4 or less carbon atoms, an alkoxy group having 1 or more and 6 or less carbon atoms, or a halogen atom,
in Formula (B8), Rb⁴⁰⁸, Rb⁵⁰⁸, Rb⁸⁰⁸, and Rb⁹⁰⁸ are each independently a hydrogen atom, an alkyl group having 1 or more and 4 or less carbon atoms, an alkoxy group having 1 or more and 6 or less carbon atoms, or a halogen atom.

6. The electrophotographic photoreceptor according to any one of claims 1 to 5,
wherein the polyarylate resin and the polycarbonate resin each have a constitutional unit including biphenyl represented by Formula (BP), 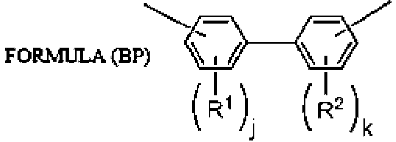
in Formula (BP), j is an integer of 0 or greater and 4 or less, j pieces of R¹'s are each independently a methyl group or an ethyl group, k is an integer of 0 or greater and 4 or less, and k pieces of R²'s are each independently a methyl group or an ethyl group.

7. The electrophotographic photoreceptor according to any one of claims 1 to 6,
wherein a proportion of the polyarylate resin in a total amount of the polyarylate resin and the polycarbonate resin contained in the outermost surface layer is 25% by mass or more and 75% by mass or less.

8. The electrophotographic photoreceptor according to any one of claims 1 to 7,
wherein the photosensitive layer includes a charge generation layer and a charge transport layer, and
the charge transport layer is the outermost surface layer.

9. A process cartridge comprising:
the electrophotographic photoreceptor according to any one of claims 1 to 8,
wherein the process cartridge is attachable to and detachable from an image forming apparatus.

10. An image forming apparatus comprising:
the electrophotographic photoreceptor according to any one of claims 1 to 8;
a charging device that charges a surface of the electrophotographic photoreceptor;
an electrostatic latent image forming device that forms an electrostatic latent image on the charged surface of the electrophotographic photoreceptor;
a developing device that develops the electrostatic latent image formed on the surface of the electrophotographic photoreceptor with a developer containing a toner to form a toner image; and
a transfer device that transfers the toner image to a surface of a recording medium.

11. The image forming apparatus according to claim 10, further comprising:
a cleaning device that has a cleaning blade coming into contact with the surface of the electrophotographic photoreceptor and cleans the surface of the electrophotographic photoreceptor.

12. The image forming apparatus according to claim 11,
wherein a contact portion of the cleaning blade coming into contact with the electrophotographic photoreceptor contains a polyurethane rubber obtained by polymerizing at least a polyol component and a polyisocyanate component, and the contact portion is formed of a member having a ratio M100/Re of a 100% modulus M100 (MPa) to a rebound resilience Re (%) of 0.25 or more, the rebound resilience Re of less than 25%, and a tensile stress at a 200% strain of 15 MPa or more.

13. The image forming apparatus according to claim 12,
wherein the ratio M100/Re is 0.28 or more and 1.0 or less.
